(19) Europäisches Patentamt
European Patent Office
Office européen des brevets

(11) Veröffentlichungsnummer: **0 359 037**
**A2**

# (12) EUROPÄISCHE PATENTANMELDUNG

(21) Anmeldenummer: **89116055.8**

(22) Anmeldetag: **31.08.89**

(51) Int. Cl.5: **C08L 77/00 , //C08K5/12, C08K5/20,C08K5/22,C08K5/32, (C08L77/00,67:02),(C08L77/00, 77:12)**

(30) Priorität: **13.09.88 DE 3831121**
**28.04.89 DE 3914048**

(43) Veröffentlichungstag der Anmeldung:
**21.03.90 Patentblatt 90/12**

(84) Benannte Vertragsstaaten:
**BE CH DE ES FR GB IT LI NL**

(71) Anmelder: **BAYER AG**

**D-5090 Leverkusen 1 Bayerwerk(DE)**

(72) Erfinder: **Heinz, Hans-Detlef, Dr.**
**Breslauer Strasse 31**
**D-4150 Krefeld(DE)**
Erfinder: **Pielartzik, Harald, Dr.**
**Doerperhofstrasse 39**
**D-4150 Krefeld(DE)**
Erfinder: **El-Sayed, Aziz, Dr.**
**Saarlauterner Strasse 39**
**D-5090 Leverkusen 1(DE)**
Erfinder: **Meyer, Rolf-Volker, Dr.**
**Buchheimerstrasse 23**
**D-4150 Krefeld(DE)**
Erfinder: **Wandel, Martin, Dr.**
**Donatusstrasse 17**
**D-4047 Dormagen 11(DE)**
Erfinder: **Nyssen, Peter-Roger, Dr.**
**Magnolienstrasse 6**
**D-4047 Dormagen 11(DE)**

## (54) Leichtfliessende Polyamid-Formmassen und -Legierungen.

(57) Die Erfindung betrifft neue, leichtfließende Polyamid-Formmassen und -Legierungen, dadurch gekennzeichnet, daß sie durch Schmelzvermischen an und für sich bekannter Polyamide mit niedermolekularen, flüssigkristallinen Estern und/oder Esteramiden der Formel (I) und/oder flüssigkristallinen, oligomeren Estern und/oder Esteramiden der Formel (II) sowie gegebenenfalls weiteren Zusatzstoffen, wobei im Falle von Polyamid-Legierungen mindestens ein polymerer Legierungspartner als weiterer Zusatzstoff eingesetzt wird, hergestellt werden, sowie die Verwendung dieser flüssigkristallinen (LC)-Additive I und/oder II als Fließverbesserer in Polyamid-Formmassen und-Legierungen und ein Verfahren zur Herstellung der neuen Polyamid-Formmassen und -Legierungen. Die Erfindung umfaßt weiterhin die neuen oligomeren Ester und/oder Esteramide der Formel (II).

EP 0 359 037 A2

## Leichtfließende Polyamid-Formmassen und -Legierungen

Die Erfindung betrifft neue, leichtfließende Polyamid-Formmassen und -Legierungen, dadurch gekennzeichnet, daß sie durch Schmelzvermischen an und für sich bekannter Polyamide mit niedermolekularen, flüssigkristallinen Estern und/oder Esteramiden der Formel (I) und/oder flüssigkristallinen, oligomeren Estern und/oder Esteramiden der Formel (II) sowie gegebenenfalls weiteren Zusatzstoffen, wobei im Fall von Polyamid-Legierungen mindestens ein polymerer Legierungspartner als weiterer Zusatzstoff eingesetzt wird, hergestellt werden, sowie die Verwendung dieser flüssigkristallinen (LC)-Additive I und/oder II als Fließverbesserer in Polyamid-Formmassen und -Legierungen und ein Verfahren zur Herstellung der neuen Polyamid-Formassen und -Legierungen. Die Erfindung umfaßt weiterhin die neuen oligomeren Ester und/oder Esteramide der Formel (II).

Polyamide sind eine seit vielen Jahren für ein Vielzahl praktischer Anwendungen bewährte Klasse von Polymeren, die nach verschiedenen Verfahren hergestellt werden können, die aus sehr unterschiedlichen Polyamid-bildenden Bausteinen synthetisiert werden können und die im speziellen Anwendungsfall, allein oder auch in Kombination mit Verarbeitungshilfsmitteln, polymeren Legierungspartnern oder auch mineralischen Verstärkungsmaterialien (wie. z.B. Füllstoffe oder Glasfasern), zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch eingesetzt.

Ein sehr großer Teil der verschiedenen Polyamid-Formmassen wird im Spritzguß verarbeitet, d.h. das Polyamid wird aufgeschmolzen und unter Druck in eine Form gepreßt, in der es beim Abkühlen erstarrt. Hier spielt die Fließfähigkeit eine entscheidende Rolle; je leichter eine Polyamid-Masse fließt, desto besser kann die Form gefüllt werden. Dies ist insbesondere bei sehr dünnwandigen Teilen von größter Bedeutung.

Während die teilkristallinen Polyamide mittleren Molekulargewichts eine gute Fließfähigkeit besitzen, sinkt diese infolge der mit steigendem Molekulargewicht stark wachsenden Schmelzviskosität beim Übergang zu höhermolekularen Polyamiden schnell ab. In Anbetracht der Tatsache, daß die mechanischen Eigenschaften von Polyamiden mit steigendem Molekulargewicht noch besser werden, insbesondere die Schlagzähigkeit, stellt dies eine drastische Beschränkung ihres Einsatzbereiches dar.

Im Gegensatz zu den teilkristallinen, aliphatischen Polyamiden weisen amorphe Polyamide, insbesondere dann, wenn ihre Glastemperaturen oberhalb von ca. 150 °C liegen, schon bei relativ niedrigen Molekulargewichten sehr hohe Schmelzviskositäten und entsprechend geringe Fließfähigkeit auf. Auch hier ist die Verarbeitbarkeit also erschwert.

Bekanntlicherweise nehmen die teilkristallinen Polyamide, je nach Struktur, unterschiedliche Mengen Wasser auf. Dies führt zu einer Erhöhung der Zähigkeit, jedoch zu einer Verringerung der Steifigkeit, da das Wasser als Weichmacher wirkt.

Zur Erhöhung der Steifigkeit werden Polyamide daher seit langem mit anorganischen Verstärkungsstoffen, z.B. Glasfasern oder mineralischen Füllstoffen, ausgerüstet.

Die durch die anorganischen Verstärkungsstoffe erzielte Erhöhung von Steifigkeit, Härte, Wärmeformbeständigkeit und Dimensionsstabilität wird jedoch in aller Regel durch Nachteile erkauft, insbesondere durch eine verminderte Fließfähigkeit - besonders bei faserförmigen Verstärkungsstoffen - wodurch die Verarbeitbarkeit erschwert wird.

Die verringerte Fließfähigkeit hat zur Folge, daß, insbesondere für großflächige Formteile, zum Füllen der Form immer mehr Angußstellen benötigt werden, d.h. die Werkzeuge werden immer aufwendiger. Dadurch bedingt tritt auch eine größere Zahl unerwünschter Fließnähte auf, die die optischen und mechanischen Gebrauchseigenschaften der Formteile beeinträchtigen können. Weiterhin wird es sehr schwierig, einwandfreie Oberflächenqualitäten und dünnwandige Formteile herzustellen.

Es wäre daher von großer technologischer Bedeutung, wenn die Fließfähigkeit o.g. Polyamidtypen drastisch verbessert werden könnte.

Polyamid-Legierungen weisen je nach Art des polymeren Legierungspartners unterschiedliche Eigenschaften im Vergleich zur reinen PA-Komponente auf und sind somit besonders wertvolle Werkstoffe.

Wohlbekannte Legierungen stellen z.B. die schlagzäh modifizierten Polyamide dar. Hier handelt es sich um zweiphasige Polymerlegierungen, welche zur Erhöhung der Schlag- bzw. Kerbschlagzähigkeit von Polyamiden im spritzfrischen Zustand oder auch bei tiefen Temperaturen spezielle elastomere Partner enthalten. Beispiele für solche Legierungspartner sind z.B. Dien- und Acrylatkautschuke, EPDM, Ethylen-Acrylsäure-Copolymere und andere, wie sie im Stand der Technik in großer Zahl beschrieben sind.

Zusätzlich zu dem Elastomermodifikator können Verstärkungsstoffe anwesend sein; in solchen Legierungen sind dann sowohl Zähigkeit als auch Steifigkeit gegenüber nicht modifizierten Polyamiden erhöht.

Eine weitere große Gruppe von Polyamid-Legierungen enthält z.B. amorphe Thermoplasten mit gegenüber Standardpolyamiden erhöhter Glastemperatur und Steifigkeit.

Dadurch wird die Wasseraufnahme der Polyamide verringert und die Wärmeformbeständigkeit (gemessen z.B. durch die Heat-distortion-Temperatur (HDT)) sowie die Steifigkeit erhöht. Beispiele für Legierungspartner dieser Art sind Polystyrol, ABS, Polycarbonat, aromatische Polyester-(Carbonate), Polyphenylenoxide, Polymethylmethacrylat, Polyethersulfone und andere mehr. Diese Legierungen können auch zusätzlich noch Schlagzähmodifikatoren enthalten.

Auch Legierungen von Polyamiden mit teilkristallinen Thermoplasten sind bekannt.

Von Nachteil ist allerdings, daß auch diese PA-Legierungen i.a. eine gegenüber der reinen PA-Komponente stark verringerte Fließfähigkeit besitzen und ihre Verarbeitbarkeit daher erschwert ist. Dies gilt insbesondere dann, wenn die Legierungen zusätzlich noch Verstärkungsstoffe enthalten.

Daher wäre es auch für diese Werkstoffe von großer technologischer Bedeutung, die Fließfähigkeit deutlich erhöhen zu können und somit ihre Verarbeitbarkeit zu hochwertigen Formteilen zu erleichtern. Dadurch könnte auch die Verarbeitungstemperatur gesenkt werden, was eine geringere Materialbelastung bedeutet. Dies wirkt sich besonders bei Legierungen mit Kautschukmodifikatoren positiv aus.

Überraschend wurde nun gefunden, daß spezielle flüssigkristalline, niedermolekulare und/oder oligomere Addi tive (I und/oder II), schon in sehr geringen Mengen den Polyamiden zugesetzt, eine drastische Erhöhung der Fließfähigkeit von Polyamidformmassen und auch von Polyamidlegierungen bewirken. Darüber hinaus kann durch diese Maßnahme auch eine Reihe mechanischer Eigenschaften sowie u.U. die Wärmeformbeständigkeit verbessert werden. Weiterhin kann durch diese Maßnahme auch gegebenenfalls die Wasseraufnahme der Polyamide verringert sowie die Kristallisationsgeschwindigkeit und der Kristallisationsgrad erhöht werden, was sich durch verbesserte Dimensionsstabilität von Formteilen und längere Verarbeitbarkeit geöffneter Gebinde, sowie u.U. geringere Zykluszeiten äußern kann.

Gegenstand der Erfindung sind daher neue, leichtfließende Polyamid-Formmassen und -Legierungen, dadurch gekennzeichnet, daß sie durch Vermischen von

1) 85-99,9 Gew.-% an sich bekannter Polyamide mit

2) 0,1 bis 15 Gew.-%, bevorzugt 0,3 bis 8 Gew.-%, besonders bevorzugt 0,5 bis 5 Gew.-% niedermolekularer, flüssigkristalliner Ester und/oder Esteramide ("LC-Fließverbesserer") des allgemeinen Strukturtyps (I)

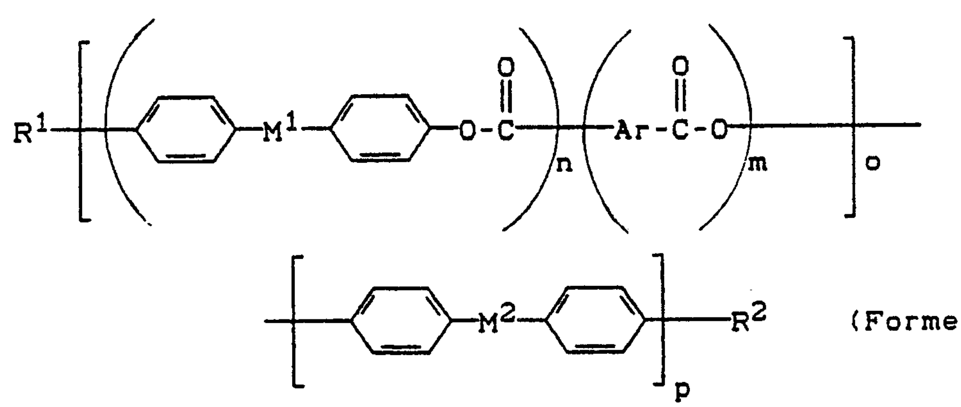

(Formel I)

worin

-Ar ein aromatischer Rest mit 6-20 C-Atomen ist, der einkernig oder mehrkernig sein kann, wobei der mehrkernige Rest über eine Bindung verknüpft oder annelliert sein kann,

worin

$R^1$ und $R^2$ gleich oder verschieden sein können und H, Chlor, -O-$C_1$-$C_4$-Alkyl, -O-$C_3$-$C_6$-Cycloalkyl, -O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$-Cycloalkyl, fluoriertes $C_6$-$C_{14}$-Aryl, oder ein Rest der Formeln (1)/a) bis I),

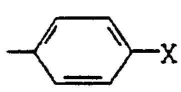 , 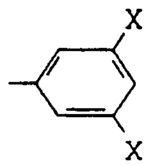 , 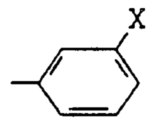 , 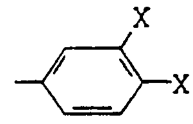 ,

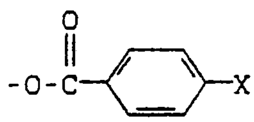 , 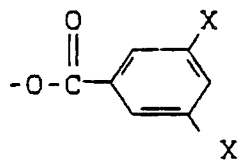 , 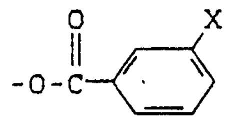 ,

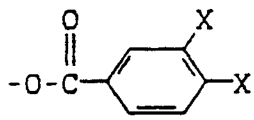 , 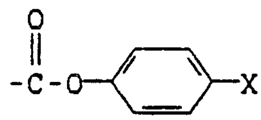 ,

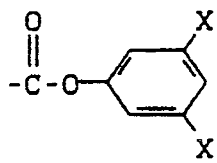 , 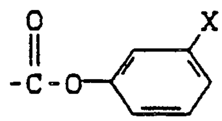 , 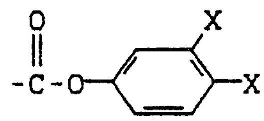

(Reste - (1.a) - (1.l), entsprechend ihrer Aufeinanderfolge) sind,
wobei
X wiederum die vorstehend für $R^1$ bzw. $R^2$ genannten Reste von H bis fluoriertes $C_6$-$C_{14}$-Aryl ist,
worin $-M^1$ und $-M^2$ gleich oder verschieden sind und zweibindige Reste der Formeln I.1) bis I.11)
$-\underset{\overset{\|}{O}}{C}-O-$, $-\underset{\overset{\|}{O}}{C}-NH-$,
$-N=N-$, $-N=\underset{\overset{\downarrow}{O}}{N}-$,
$-CH=N-$, $-CH=CH-$,
$-C\equiv C-$, $-O-\underset{\overset{\|}{O}}{C}-$,
$-HN-\underset{\overset{\|}{O}}{C}-$, $-\underset{\overset{\downarrow}{O}}{N}=N-$
und $-N=CH-$
(Formeln (I.1) - (I.11), entsprechend ihrer Aufeinanderfolge)
sein können,
und worin
m Null, 1 oder 2,
n 1 oder 2,
o 1, 2, 3 oder 4 und
p Null oder 1 sind, wobei im Falle von p = Null
$R^2$ nur (1a), (1b), (1c) oder (1d) sein kann,
und/oder
flüssigkristalliner Ester- und/oder Esteramid-Oligomerer des Strukturtyps der Formel (II) mit statistischer Verteilung der Struktureinheiten

$$\left[R^3-\overset{O}{\overset{\|}{C}}-\right]\left[-O-Ar^a-\overset{O}{\overset{\|}{C}}-\right]_b\left[-O-Ar^b-O-\right]_c\left[-\overset{O}{\overset{\|}{C}}-R^4-\overset{O}{\overset{\|}{C}}-\right]_d\left[-NH-R^5-Y'-\right]_e\left[-\overset{O}{\overset{\|}{C}}-R^3\right]$$

Formel (II)

worin

$R^3$ einen Alkylrest, vorzugsweise Methylrest, oder einen gegebenenfalls substituierten, vorzugsweise mono- oder disubstituierten Arylrest, vorzugsweise einen Phenylrest, darstellt,

($R^3$- $\underset{\underset{O}{\|}}{C}$

ist jeweils eine Endgruppe)

$Ar^a$ ein bivalenter, gegebenenfalls substituierter (Substituenten wie in $R^3$), ein- oder mehrkerniger aromatischer Rest mit 6-24 C-Atomen ist, wobei der mehrkernige Rest direkt verknüpft oder auch anelliert sein kann,

$Ar^b$ einen bivalenten, gegebenenfalls substituierten, ein- oder mehrkernigen aromatischen Rest mit 6-30 C-Atomen darstellt, wobei der mehrkernige Rest unterschiedlich verknüpft sein kann,

$R^4$ bzw. $R^5$ für einen Alkylrest mit 0-40 ($R^4$) bzw. 3-40 ($R^5$) C-Atomen stehen oder beide auch für einen cycloaliphatischen Rest mit 5-15 C-Atomen stehen können oder die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch annelliert verknüpft sein kann,

$Y'$ für -O-,

- $\overset{\overset{O}{\|}}{C}$ - oder -NH- steht, und im Falle der Verknüpfung mit einer Endgruppe

- $\overset{\overset{O}{\|}}{C}$ -$R^3$ für die Reste -O- oder -NH- steht, und

b = Null bis 10, vorzugsweise bis 8, insbesondere bis 4,

c = 1 bis 9, vorzugsweise bis 7, insbesondere 1 bis 4,

d = Null bis 9, vorzugsweise bis 7, insbesondere bis 3,

e = Null bis 3, vorzugsweise bis 2, ist

und worin die Endgruppen durch Strukturelemente des Typs

$R^3$- $\overset{\overset{O}{\|}}{C}$ - gebildet werden,

und wobei das mittlere Molekulargewicht $\overline{M}n$ der Verbindungen der Formel (II) nicht größer als 4000, bevorzugt nicht größer als 2500 ist,

sowie gegebenenfalls

3) 0,001-150 Gew.-%, bezogen auf die Summe der Gewichte der Komponenten 1) und 2), an üblichen Zusatzstoffen, wobei die Zusatzstoffe wahlweise auch ganz oder teilweise schon in den unter 1) genannten Polyamiden enthalten sein können, hergestellt werden.

Zu den Verbindungen der Formel (I):

Besonders bevorzugte Reste -Ar- der Formel (I) und der Reste $Ar^a$ und $Ar^b$ in Formel (II) sind die Reste (Ar1) bis (Ar4)

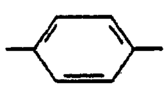 , 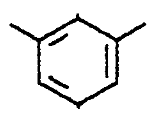 , 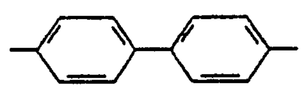 ,

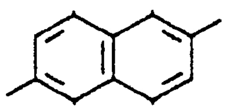 :

(Ar1)-(Ar4), entsprechend ihrer Reihenfolge.

Bevorzugte Reste $R^1$ und $R^2$ sind H, $CH_3$, $OCH_3$, Cyclohexyl, Phenyl, $CF_3$, $OCF_3$, fluoriertes Cyclohexyl und fluoriertes Phenyl.

Bevorzugte Reste -M- sind solche der Formeln (I.1), (I.2), (1.5), (I.8), (I.9) und (1.11).

Bevorzugte Indexkombinationen m, n, o, p und q sind

m = Null, n = 1, o = 1, p = Null;

m = Null, n = 1, o = 1, p = 1;

m = Null, n = 2, o = 1, p = 1;

m = n = o = p = 1;

m = 1, n = 1, o = 2, p = 1;

m = Null, n = 2, o = 1, p = Null;
m = 1, n = 2, o = 1, p = 1 und
m = 1, n = 1, o = 3, p = 1.

Die Verbindungen der Formel (I) zeichnen sich dadurch aus, daß sie beim Schmelzen eine flüssigkristalline Phase durchlaufen (bezüglich flüssigkristalliner Verbindungen bzw. Phasen siehe beispielweise: D. Demus, L. Richter, Textures of Liquid Crystals, Verlag Chemie, Weinheim - New York 1978 oder H. Kelker, R. Hatz, Handbook of Liquid Crystals Verlag Chemie, Weinheim, Deerfield 1980).

Bevorzugte Verbindungen der Formel (I) sind solche, die 3 bis 25 aromatische Teilstrukturen enthalten, wobei der Rest -Ar- als eine Teilstruktur gewählt ist, unabhängig davon, ob er einkernig oder mehrkernig ist. Besonders bevorzugte Verbindungen der Formel (I) sind solche, die 4 bis 15 aromatische Teilstrukturen enthalten, wobei wiederum der Rest -Ar- als eine aromatische Teilstruktur gewählt ist, unabhängig davon ob er einkernig oder mehrkernig ist. Ganz besonders bevorzugte Verbindungen der Formel (I) sind solche, die 4 bis 10 aromatische Teilstrukturen im vorstehend definierten Sinne haben.

Als Verbindungen der Formel (I) seien beispielsweise die folgenden vier Gruppen von Verbindungen (I,A) bis (I,D) genannt:

(I,A) Flüssigkristalline Verbindungen der Formel (I) mit drei aromatischen Teilstrukturen, worin
m = Null, n = 1, o = 1 und p = Null sind,
wobei die Verbindungen 1 und 2 bereits literaturbekannt sind, und zwar aus D. B. Schroeder, J. Org. Chem. 38, 3160 (1973) beziehungsweise aus J.P. Van Meten, B.H. Klanderman, Mol. Cryst. Liquid Cryst. 1973, Vol. 22, Seiten 285 ff..

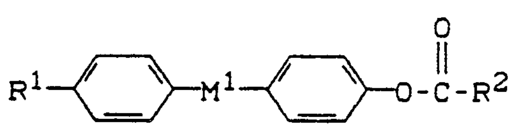 (Formel IA)

| Nr. | $R^1$ | $M^1$ | $R^2$ |
|---|---|---|---|
| 1 | $CH_3$ | 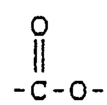 | 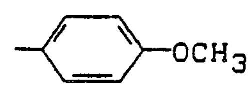 |
| 2 | $CH_3O$- | 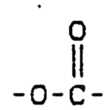 | 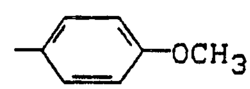 |
| 3 | $CH_3O$- | 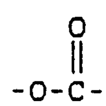 | 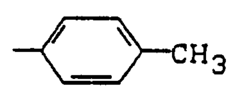 |
| 4 | $CH_3$ | 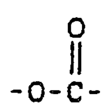 | 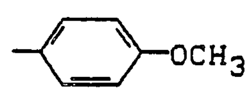 |

(I,B) Flüssigkristalline Verbindungen der Formel (I) mit vier aromatischen Teilstrukturen, worin wieder m = Null, n = 1, o = 1 und p = Null sind:

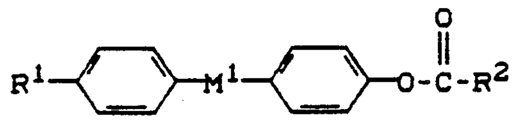

(Formel IB)

| Nr. | $R^1$ | $M^1$ | $R^2$ |
|---|---|---|---|
| | 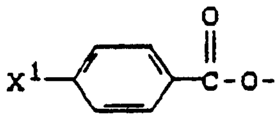 | 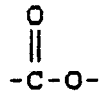 | 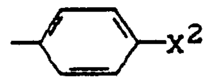 |
| 5 | $X^1$=H | | $X^2$=H |
| 6 | $CH_3$ | | $CH_3$ |
| 7 | $OCH_3$ | | $OCH_3$ |
| 8 | $CF_3$ | | $CF_3$ |
| 9 | Cl | | Cl |

(I,C) Flüssigkristalline Verbindungen der Formel (I) mit fünf aromatischen Teilstrukturen, worin m = n = o = p = 1 sind.

Hierbei ist Verbindung 10 bereits in der Literatur genannt, und zwar bei V.N. Tsvetkov, Eur. Polym. J. Vol. 21, No 11, Seite 933 (1985).

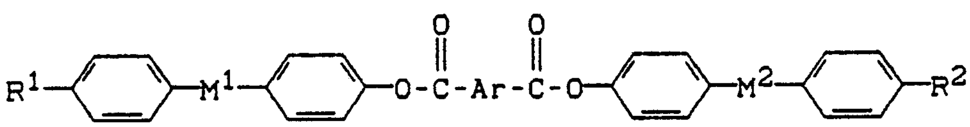

(Formel IC)

| Nr. | $R^1$ | $M^1$ | $M^2$ | $R^2$ | Ar |
|---|---|---|---|---|---|
| 10 | H | 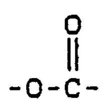 | 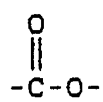 | H | 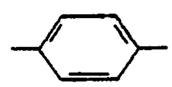 |
| 11 | $CH_3$ | " | " | $CH_3$ | " |
| 12 | $OCH_3$ | " | " | $OCH_3$ | " |
| 13 | H | 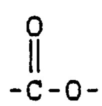 | 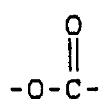 | H | " |
| 14 | $CH_3$ | " | " | $CH_3$ | " |
| 15 | $OCH_3$ | " | " | $OCH_3$ | " |

(I.D) Flüssigkristalline Verbindungen der Formel (I) mit sieben aromatischen Teilstrukturen, worin wieder m = n = o = p = 1 sind:

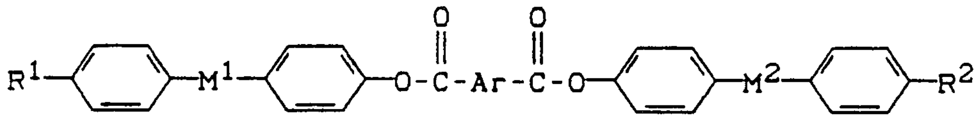

(Formel I D)

| Nr. | $R^1$ | $M^1$ | Ar | $M^2$ | $R^2$ |
|---|---|---|---|---|---|
| 16 | 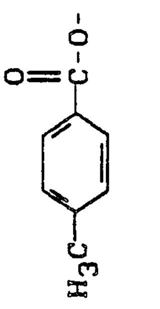 | 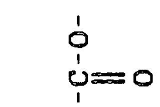 | 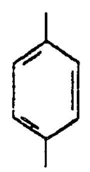 | 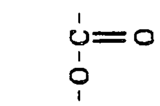 | 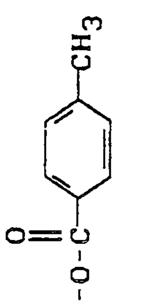 |
| 17 | 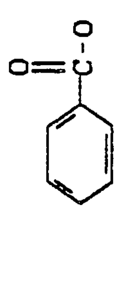 | 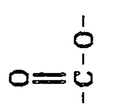 | 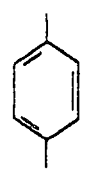 | 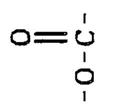 | 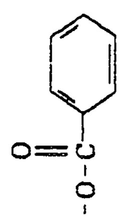 |
| 18 | 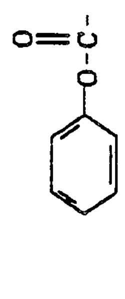 | 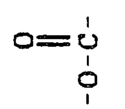 | 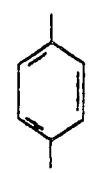 | 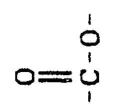 | 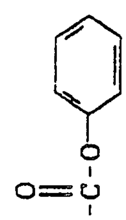 |
| 19 | 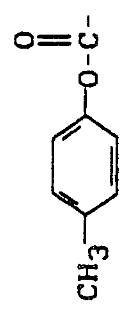 | 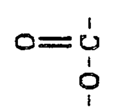 | 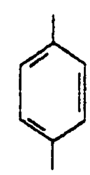 | 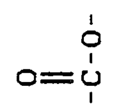 | 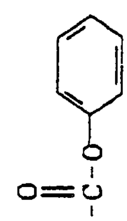 |

Besonders bevorzugt verwendete Verbindungen der Formel (I) sind solche, die 4 bis 15 aromatische Teilstrukturen enthalten, wobei der Rest -Ar- als eine Teilstruktur gezählt ist, unabhängig davon, ob er einkernig oder mehrkernig ist. Ganz besonders bevorzugte Verbindungen der Formel (I) sind solche, die 4

bis 10 aromatische Teilstrukturen enthalten, wobei wiederum der Rest -Ar-als eine aromatische Teilstruktur gezählt ist, unabhängig davon, ob er einkernig oder mehrkernig ist.

Die Herstellung der Verbindungen der Formel (I) kann, rein formal gesehen, aus den folgenden Bausteinen (A) bis (F) erfolgen:

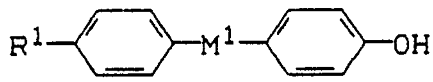
(A)

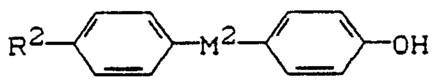
(B)

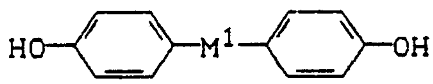
(C)

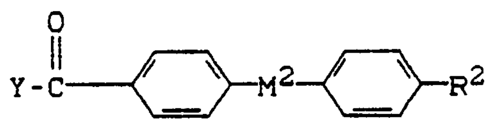
(D)

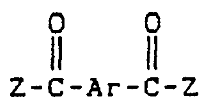
(E)

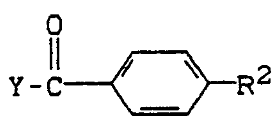
(F)

In den Formeln (A) bis (F) haben $M^1$, $M^2$ und Ar die für Formel (I) genannte Bedeutung, $R^1$ und $R^2$ haben ebenfalls die für Formel (I) genannte Bedeutung; zusätzlich können $R^1$ und $R^2$ noch die Funktion einer leicht abspaltbaren Schutzgruppe wie z.B.

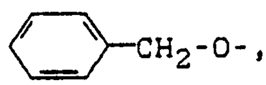

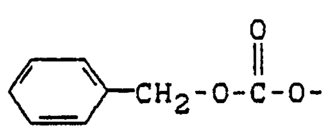
und

$R_3Si$-O- besitzen.

Y und Z sind reaktive Reste von aromatischen Carbonsäurederivaten, beispielsweise Cl, Br oder Anhydridgruppierungen. Reaktiv bedeutet in diesem Zusammenhang die Befähigung der Carbonsäurederivate zur Bildung von Estern mit Phenolen oder Phenolaten.

Y kann zusätzlich zu der definierten Funktion eines reaktiven Restes bei der Herstellung von Zwischenstufen noch eine leicht abspaltbare Schutzgruppe, z.B.

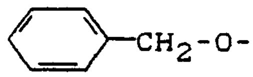 oder

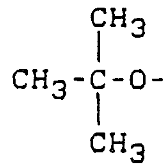

bedeuten.

Im einzelnen erfolgt die Herstellung der Verbindungen der Formel (I) durch Umsetzung der phenolischen Verbindungen (A) und/oder (B) und/oder (C) oder deren Alkalisalze mit den reaktiven Derivaten aromatischer Carbonsäuren (D) und/oder (E) und/oder (F), wobei diese Veresterungsreaktionen nach bekannten Methoden durchgeführt werden können, beispielsweise gemäß Houben-Weyl, Methoden der organischen Chemie, Ergänzungsband E-5.

Bevorzugt werden diese Veresterungsreaktionen in einem basischen Milieu durchgeführt, wobei als Basen insbesondere Alkalimetallhydroxide wie Natrium- oder Kaliumhydroxid, Alkalimetallcarbonate bzw. -hydrogencarbonate wie Natriumcarbonat, Natriumhydrogencarbonat, Kaliumcarbonat oder Kaliumhydrogencarbonat, Alkalimetallacetate wie Natrium- oder Kaliumacetat, Erdalkalimetallhydroxide wie Calciumhydroxid oder organische Basen wie Triethylamin, Diisopropylethylamin, 1,8-Bis(dimethylamino)naphthalin, Pyridin, Lutidin, Kollidin, Chinolin oder N,N-Dimethylanilin von Bedeutung sind.

Die Veresterungen werden vorteilhaft in Gegenwart eines inerten Lösungsmittels durchgeführt. Gut geeignet sind insbesondere Ether wie Diethylether, Di-n-butylether, Tetrahydrofuran, Dioxan oder Anisol, Ketone wie Aceton, Butanon, Pentanon-(3) oder Cyclohexanon, Amide wie Dimethylformamid oder Hexamethylphosphorsäuretriamid, Kohlenwasserstoffe wie Benzol, Toluol oder Xylol, Halogenkohlenwasserstoffe wie Tetrachlorkohlenstoff oder Tetrachlorethylen und Sulfoxide wie Dimethylsulfoxid oder Sulfolan. Gelegentlich kann auch ein Überschuß einer verwendeten organischen Base, z.B. Pyridin, Chinolin, N,N-Dimethylanilin oder Triethylamin als Lösungsmittel für die Veresterung angewandt werden. Prinzipiell können die Veresterungsreaktionen auch in Abwesenheit der Hilfsbase, z.B. durch einfaches Erhitzen der Komponenten in einem inerten Lösungsmittel, durchgeführt werden.

Die Reaktionstemperatur liegt gewöhnlich zwischen -50° C und +200° C, vorzugsweise zwischen -20° C und +160° C. Bei diesen Temperaturen sind die Veresterungsreaktionen in der Regel nach 15 Minuten bis 48 Stunden beendet.

Weitere Angaben zur Herstellung finden sich in der von der Anmelderin eingereichten Patentanmeldung DE-Anmeldenummer P 3 824 365.2. Die Herstellung der Verbindungen der Formel (I) erfolgt somit dadurch, daß man phenolische Verbindungen der Formeln (A) und/oder (B) und/oder (C) oder deren Alkalisalze, mit reaktiven Derivaten aromatischer Carbonsäuren der Formeln (D) und/oder (E) und/oder (F) in Abhängigkeit von der Funktionalität der Reaktanten (A) bis (F) unter Berücksichtigung der auszunutzenden Schutzgruppen und in Abhängigkeit von den zu erzielenden Werten für die Indeces "m", "n", "o" und "p" der Formel (I) nach bekannten Verfahren verestert.

Eine bevorzugte Ausführungsform der herstellung von (I) besteht darin, daß man die phenolischen Verbindungen in einem organischen Lösungsmittel, beispielsweise in Diethylether, Dioxan, Tetrahydrofuran oder $CH_2Cl_2$, mit einer äquimolaren Menge an organischer Base, beispielsweise Triethylamin, Pyridin oder N,N-Dimethylanilin, suspendiert und bei Temperaturen von -10° C bis +10° C unter Rühren das entsprechende aromatische Carbonsäurehalogenid, vorzugsweise das entsprechende aromatische Carbonsäurechlorid, in den berechneten Mengen eintropft. Anschließend wird etwa 10 bis 16 Stunden bei etwa 20° C nachgerührt, das organische Lösungsmittel im Vakuum entfernt und zur Abtrennung der Hydrohalogenide der organischen Basen der Rückstand in Wasser aufgenommen und das Produkt abgesauft und mit $H_2O$ neutral gewaschen.

Eine andere Verfahrensvariante des Verfahrens besteht darin, daß man die phenolischen Verbindungen in äquimolaren Mengen 10 %iger wäßriger NaOH-oder KOH-Lösung auflöst, unter Kühlen das entsprechende aromatische Carbonsäurehalogenid in den berechneten Mengen zusetzt, das ausgefallene Reaktionsprodukt absaugt, mit $H_2O$ neutral wäscht und trocknet.

Die phenolischen Verbindungen der Formel (A) sind entweder literaturbekannt (siehe beispielsweise J.B. Schroeder, J. Org. Chem. 38, 3160 (1973) und J.P. von Meter, B.H. Klandermann, Mol. Cryst. Liquid

Cryst. 1973, 22, 285) oder nach bekannten Verfahren beispielsweise wie folgt herstellbar:

$M^{1/2}$ = -COO-

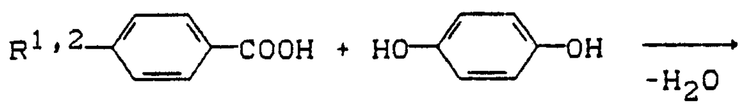

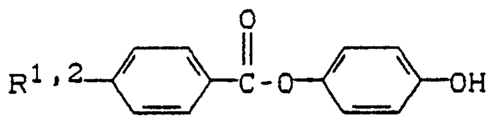

Aa/Ba

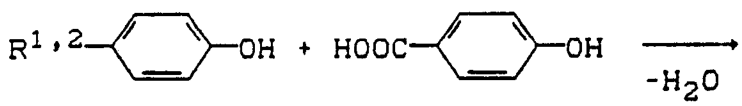

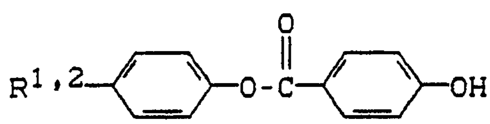

Ab/Bb

Diese Direktveresterungsreaktionen werden in einem als Wasserschleppmittel geeigneten Solvens unter saurer Katalyse nach literaturbekannten Methoden durchgeführt (siehe z.B. Houben-Weyl, Methoden der organischen Chemie, Ergänzungsband E-5). Als Lösungsmittel kommen beispielsweise Toluol, Xylol, Chlorbenzol, Dichlorbenzol in Frage.

$M^{1/2}$ = -CO-NH-

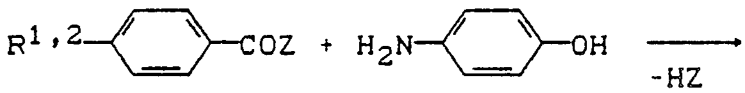


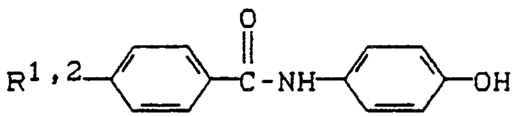

Ac/Bc

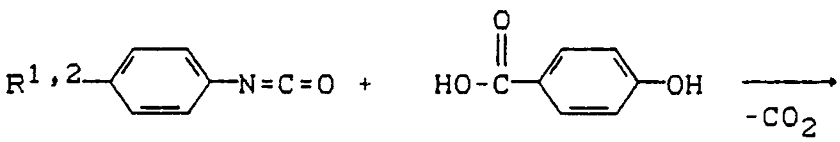


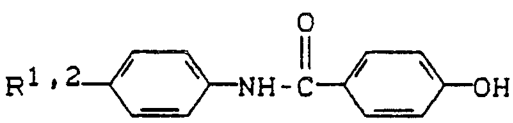

Ad/Bd

Methoden zur Herstellung sind beispielsweise von M. Ueda in J. Org. Chem. 50, 760 beschrieben.

In speziellen Fällen ist es sinnvoll, die phenolische OH-Gruppe durch eine Schutzgruppe zu blockieren.

Geeignete Methoden für die Durchführung sowohl der Amidbildung als auch der Blockierung von phenolischen OH-Gruppen sind in der Literatur beschrieben, beispielsweise in Houben-Weyl, Methoden der organischen Chemie oder von W.R. Krigbaum in Eur. Polym. J. Vol 20, 225 (1984).

Die Reaktion von Isocyanaten und Carbonsäuren ist ebenfalls bekannt und in Houben-Weyl, Methoden der organischen Chemie E5 beschreiben.

$M^{1/2}$ = -CH=N-

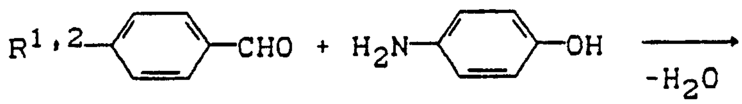



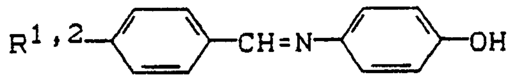

Ae/Be

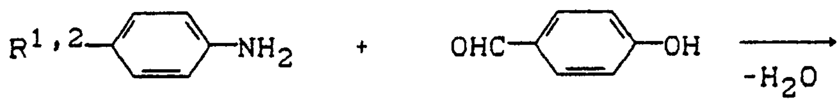



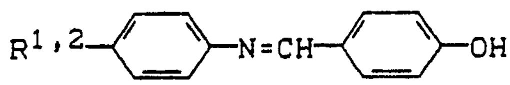

Af/Bf

Die Synthese von Aldiminen durch Kondensation von Aminen mit Aldehyden ist literaturbekannt und in Houben-Weyl, Methoden der organischen Chemie beschrieben.

Verbindung (C) wird durch Direktveresterung von p-Hydroxybenzoesäure mit Hydrochinon nach DE-OS 3 622 611 hergestellt.

Die reaktiven Derivate der aromatischen Carbonsäuren (D) werden auf folgendem Wege hergestellt:

$M^2$ = -COO-

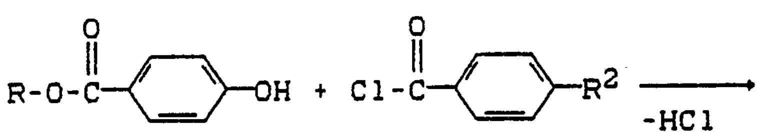



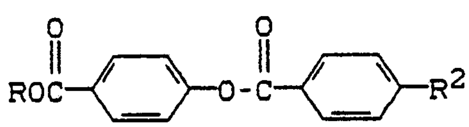

(Da)

R: z.B. 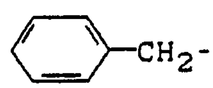 oder 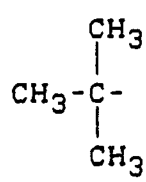

Weiterer Syntheseweg: 1) Abspaltung der Schutzgruppe R durch Hydrierung oder Thermolyse, 2) Überführung der freien Carboxylgruppe in eine reaktive Form

$Y-\overset{O}{\overset{\|}{C}}-$ bzw. $Z-\overset{O}{\overset{\|}{C}}-$ nach literaturbekannten Methoden.

$M^2$ = -NH-CO-

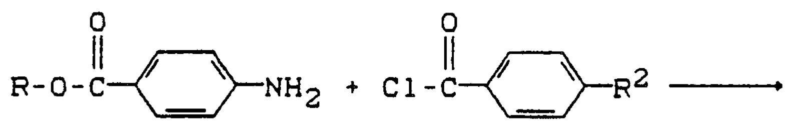

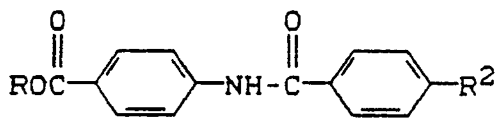

(Db)

Der weitere Syntheseweg entspricht dem für Verbindung (Da).

R hat dieselbe Bedeutung wie in (Da). Die Herstellung von (Db) ist außerdem bei O. Exner, Coll. Czech. Chem. Commun, 1970, 1371 beschrieben.

$M^2$ = -CH=N-

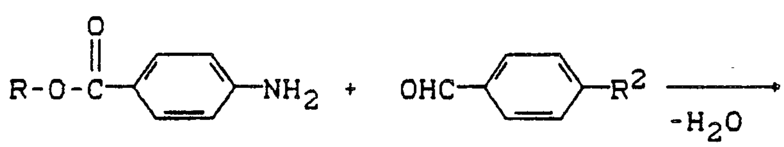

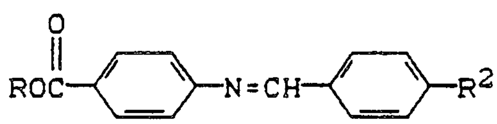

(Dc)

R hat dieselbe Bedeutung wie in (Da). Der weitere Synthesegang entspricht dem der Verbindung (Da).

Die reaktiven Derivate der aromatischen Dicarbonsäuren (E) und der aromatischen Carbonsäuren (F) sind literaturbekannt und werden durch bekannte Reaktionen hergestellt. Schutzgruppenhaltige reaktive Carbonsäurederivate (F) z.B. 4-Carbobenzoxybenzoesäurederivate werden nach W.R. Krigbaum, Eur. Polym. J. 20, 225 (1984) hergestellt.

Die Herstellung der flüssigkristallinen Verbindungen aus den Grundbausteinen (A), (B), (C), (D), (E) und (F) und anderen Hilfsstoffen ist im folgenden kurz skizziert.

3-Kern-Verbindungen (m = Null, n = 1, o = 1, p = Null):

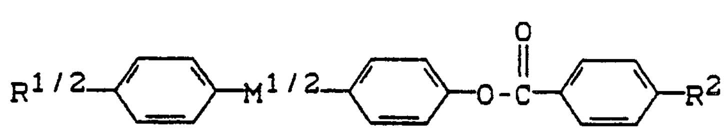

werden aus Phenolen des Typs (A) bzw. (B) durch Veresterung mit reaktiven aromatischen Carbonsäuren hergestellt.

4-Kern-Verbindungen

erhält man durch Veresterung des Esterbisphenols mit 2 Molen eines reaktiven aromatischen Carbonsäurederivates.

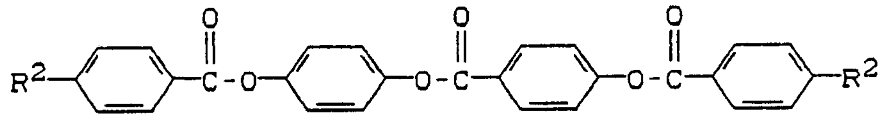

(m = Null, n = 1, o = 1, p = Null)
oder aus den Phenolen (A) bzw. (B) durch Veresterung mit dem reaktiven Carbonsäurederivat (D)

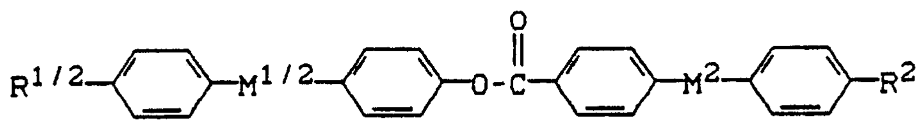

(m = Null, n = 1, o = 1, p = 1)

5-Kern-Verbindungen (m = 1, n = 1, o = 1, p = 1):

werden durch Veresterung der Phenole (A) bzw. (B) mit reaktiven aromatischen Dicarbonsäuren erhalten:

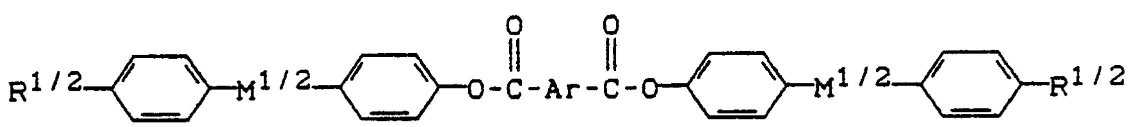

6-Kern-Verbindungen (m = Null, n = 1, o = 1, p = 1):

werden ausgehend von 4-Kern-Verbindungen des folgenden Typs:

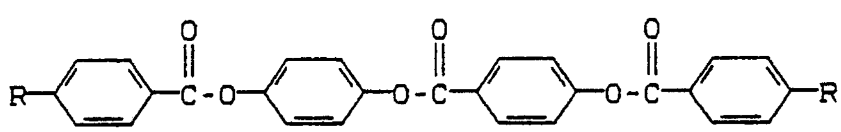

mit R = 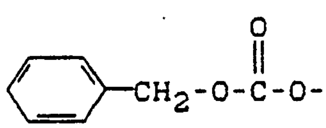

über die Synthesesequenz: 1.) Hydrierung (Abspaltung der Schutzgruppe unter Freisetzung des Bisphenols) und 2.) Veresterung der beiden phenolischen OH-Gruppen mit einem aromatischen Carbonsäurederivat (F) hergestellt.

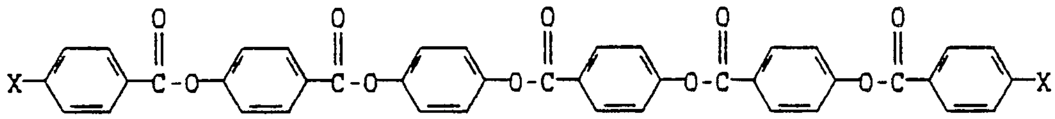

7-Kern-Verbindungen (m = n = o = p = 1):

können aus 3-Kern-Verbindungen, in denen $R^{1,2}$ = X ist, $M^{1,2} = \overset{\overset{O}{\|}}{C}$ -O- und der Ringsubstituent $R^2$ eine Schutzgruppe des Typs

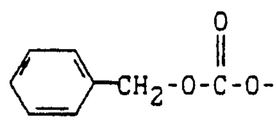

ist, über folgende Synthesesequenz erhalten werden:

1) Abhydrierung der Schutzgruppe (Freisetzung der phenolischen OH-Funktion)

2) Umsetzung mit einem reaktiven-aromatischen Dicarbonsäurederivat

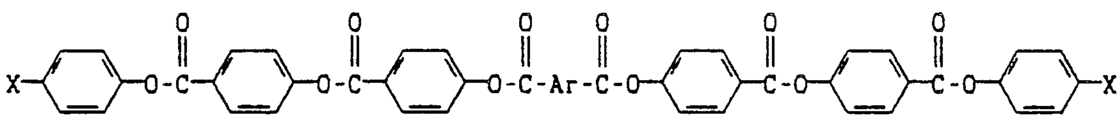

Ausgehend von 5-Kern-Verbindungen, in denen $R^{1/2}$ die Bedeutung der Schutzgruppe

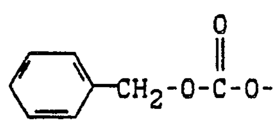

besitzt, sind 7-Kern-Verbindungen über die gleiche Synthesesequenz:

1) Abhydrierung der Schutzgruppe und

2) Umsetzung der phenolischen OH-Gruppen mit einem reaktiven aromatischen Carbonsäurederivat (VII) zugänglich:

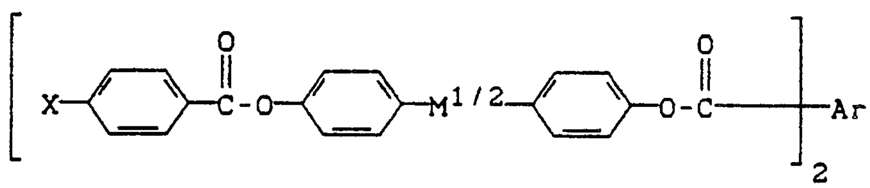

8-Kern-Verbindung (m = Null, n = 2, o = 1, p = 1)

werden ausgehend von 4-Kern-Verbindungen des Typs

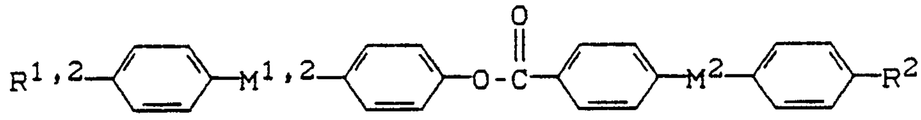

mit $R^{1,2}$ und $R^2$ = 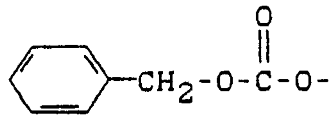

über die Synthesesequenz:

1) Abhydrierung der Schutzgruppe

2) Umsetzung der phenolischen OH-Gruppe mit reaktiven Carbonsäurederivaten des Typs (D) erhalten

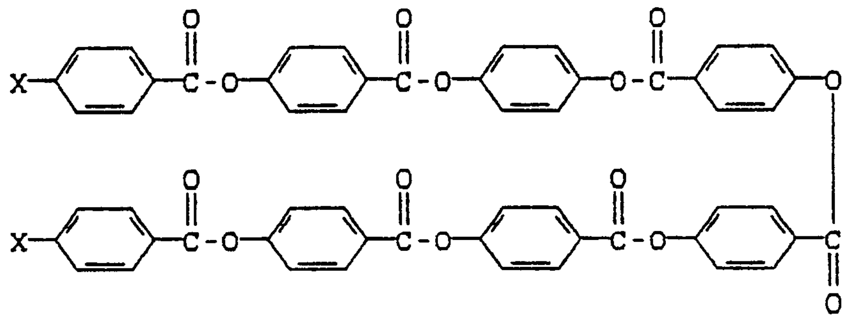

<u>9-Kern-Verbindungen</u> (m = 1, n = 1, o = 2, p = 1)

erhält man durch konsequente Ausnutzung der Schutzgruppentechnik über folgende Synthesesequenz. Veresterung von Phenolen des Typs (A) oder (B) in denen ein Rest $R^1$ bzw. $R^2$ die Bedeutung einer Schutzgruppe besitzt:

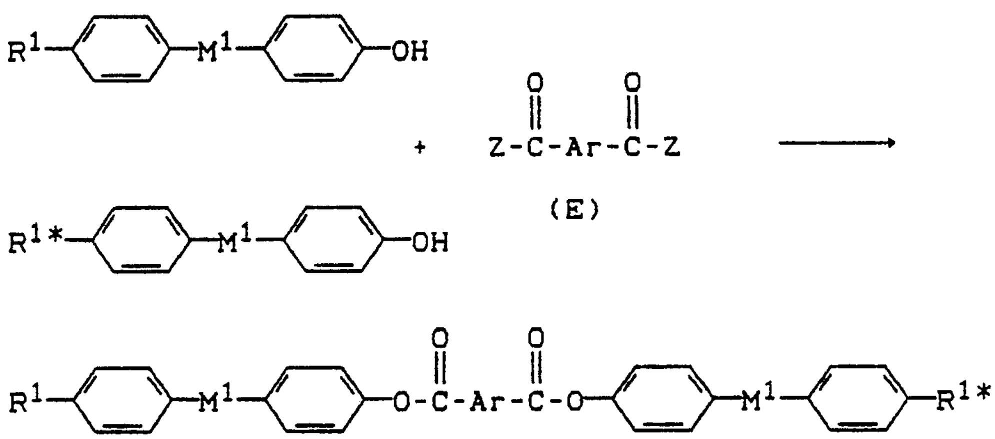

(E)

Nach Abspaltung der Schutzgruppe durch Hydrierung erfolgt Veresterung dieses Phenols zusammen mit einem 3-Kern-Phenol

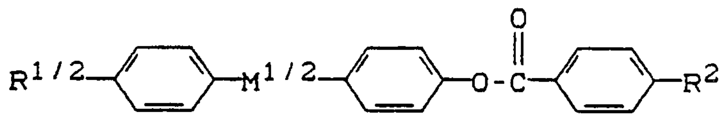

(Hergestellt durch Abspaltung der Schutzgruppe $R^{12}$:

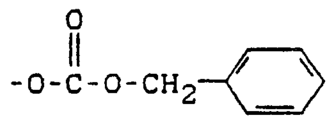 )

und einem weiteren reaktiven aromatischen Dicarbonsäurederivat (VI) zur entsprechenden 9-Kern-Verbindung:

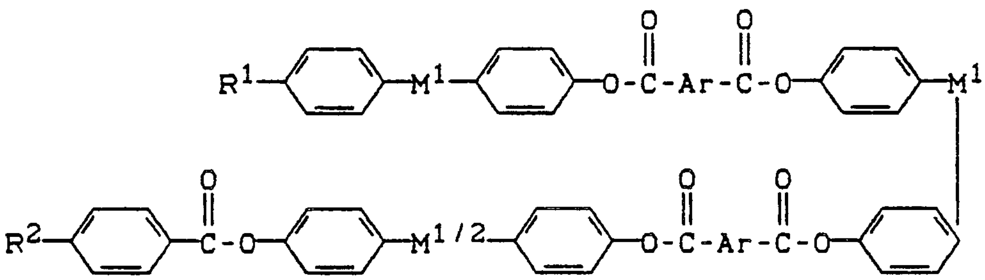

Entsprechend höherkernige Verbindungen mit mehr als 9 aromatischen Ringsystemen lassen sich analog synthetisieren.

Die niedermolekularen, flüssigkristallinen Additive (I), welche erfindungsgemäß eingesetzt werden können, sind in der eigenen, bislang unveröffentlichten Patentanmeldung (P 3 824 365.2) beschrieben und können nach den dort aufgeführten Verfahren hergestellt werden. Für ihre Herstellung wird im Beispielteil eine charakteristische Herstellungsvorschrift angegeben.

Die niedermolekularen, flüssigkristallinen Additive der Formel (I) werden bevorzugt zu 0,3-8 und besonders bevorzugt zu 0,5-5 Gew.-%, einzeln oder in einem beliebigen Gemisch, eingesetzt.

Verbindungen der Formel (II):

Bevorzugte Reste $R^3$ der Formel (II) sind Alkylreste mit 1 bis 30, besonders bevorzugt 1 bis 22 Kohlenstoffatomen, wie $CH_3$, $C_2H_5$, $C_3H_7$, $C_4H_9$, $C_5H_{11}$, $C_6H_{13}$, $C_{15}H_{31}$, $C_{16}H_{33}$, $C_{17}H_{35}$, $C_{18}H_{37}$, $C_{19}H_{39}$ und $C_{22}H_{45}$, ganz besonders bevorzugt $CH_3$, oder aromatische Reste der Formeln (III), (IIIa) und (IV)

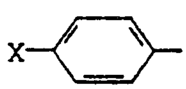 (III), 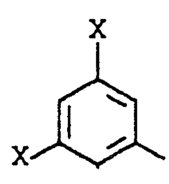 (IV), 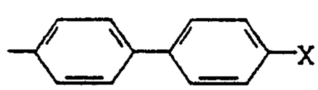 (IIIa),

worin

X Wasserstoff, Halogen, $NO_2$, $C_1$-$C_4$-Alkyl, $C_3$-$C_6$-Cycloalkyl, $C_6$-$C_{14}$-Aryl, O-$C_1$-$C_4$-Alkyl, O-$C_3$-$C_6$-Cycloalkyl, fluoriertes $C_1$-$C_4$-Alkyl, fluoriertes $C_3$-$C_6$-Cycloalkyl oder fluoriertes $C_6$-$C_{14}$-Aryl sein kann.

Insbesonders sind als $R^3$ bevorzugt aromatische Reste der Formeln (V) und (VI)

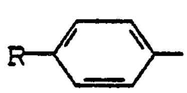 (V), 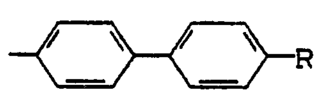 (VI),

worin
R für Wasserstoff, Halogen, wie Fluor, Chlor, $C_1$-$C_4$-Alkyl, $C_3$-$C_6$-Cycloalkyl, O-$C_1$-$C_4$-Alkyl, O-$C_3$-$C_6$-Cycloalkyl, fluoriertes $C_1$-$C_4$-Alkyl oder fluoriertes $C_3$-$C_6$-Cycloalkyl steht.

Ganz besonders bevorzugt sind solche aromatischen Reste der Formeln (V) und (VI), in denen R = Wasserstoff bedeutet.

Bevorzugte Monocarbonsäuren, von denen sich der Rest $R_3-\overset{O}{\overset{\|}{C}}-$ ableitet, sind u.a. Benzoesäure, 4-Methylbenzoesäure, 4-Methoxybenzoesäure und 4-Biphenylcarbonsäure. Besonders bevorzugt sind u.a. Benzoesäure, 4-Methylbenzoesäure und 4-Biphenylcarbonsäure.

Als bivalente aromatische Reste ($Ar^a$) in der Formel (II) kommen solche in Betracht, die den aromatischen Hydroxycarbonsäuren der Formeln

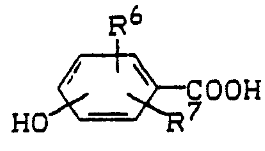

und

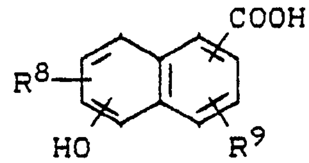

(VII) (VIII)

zugrundeliegen, worin
$R^6$ bis $R^9$ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten, und die Valenzen zwischen Kern und Hydroxylgruppe, sowie zwischen Kern und Carboxylgruppe einen Winkel von 45 bis 180° bilden.

Bevorzugte aromatische Hydroxycarbonsäuren sind 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure. Besonders bevorzugt sind 4-Hydroxybenzoesäure, 3-Hydroxybenzoesäure und 6-Hydroxy-2-naphthoesäure.

Die aromatischen Hydroxycarbonsäuren haben die OH-Gruppe vorzugsweise symmetrisch (1,4-Phenylen- oder 2,6-Naphthylen- oder 4,4′-Diphenyl-Positionen) zur Carboxylgruppe.

Als bivalente aromatische Reste ($Ar^b$) der Formel (II) kommen solche in Betracht, die den Diphenolen der Formel (IX)
HO-Z-OH (IX) zugrundeliegen,
worin
Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben m/p-Phenylen-, 2,6- oder 1,5-Naphthylen- und 4,4′-Biphenylen-Resten auch durch Sauer stoff, Schwefel, Carbonyl, Sulfonyl, oder Azomethin, $C_1$-$C_{18}$-, vorzugsweise $C_1$-$C_4$-Alkylen oder -Alkyliden, (alkylsubstituiertes) Cyclohexylen oder -hexyliden oder -$O(CH_2)_nO$-mit n = 2 bis 4 verbundene Phenylenreste.

Bevorzugte Diphenole sind z.B. Hydrochinon, 4,4′-Dihydroxydiphenyl, 4,4′-Dihydroxydiphenylether, 4,4′-Dihydroxydiphenylethan, 4,4′-Dihydroxydiphenoxyethan, 3,5′-Dihydroxydiphenyl, 3,5′-Dihydroxydiphenylether, 1,5-Dihydroxynaphthalin, 2,6-Dihydroxynaphthalin, 1,4-Dihydroxynaphthalin, Methylhydrochinon, Phenylhydrochinon, 2,2′-Dimethyl-4,4′-dihydroxydiphenyl, 3,3′,5,5′-Tetramethyl-4,4′-dihydroxydiphenyl, 1,2-(2-Chlor-4-hydroxyphenoxy)-ethan, 4-Methoxy-2,6-dihydroxynaphthalin, Resorcin, 3,4′-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole sind Hydrochinon und 4,4′-Dihydroxydiphenyl.

Als bivalente Reste ($R^4$) der Formel (II) kommen solche in Betracht, die den Dicarbonsäuren der Formel (X)
HOOC-$R^4$-COOH (X) zugrundeliegen,
worin
$R^4$ für $C_mH_{2m}$ mit m = 0-40, bevorzugt von 0-20 und von 30-38, oder auch für einen cycloaliphatischen Rest mit 5-15 C-Atomen steht, oder bevorzugt

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben 1,4-Phenylen-Resten, 1,5- oder 2,6-Naphthylen-Resten und 4,4′- oder 3,5′-Biphenylen-Resten auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$- mit n = 1 bis 4 verbundene Phenylenreste, vorzugsweise in symmetrischer Substitution ("para-Stellung").

Bevorzugt sind folgende (cyclo)aliphatische Dicarbonsäuren: Oxalsäure, Bernsteinsäure, Adipinsäure, Korksäure, Azelainsäure, Trimethyladipinsäure, Sebacinsäure, Dodecandisäure, Dimerfettsäuren und 1,4-Cyclohexandicarbonsäure.

Besonders bevorzugt werden Oxalsäure, Adipinsäure, Sebazinsäure und Dimerfettsäuren eingesetzt. Bevorzugte aromatische Dicarbonsäuren sind solche, die folgenden bivalenten Resten zugrundeliegen: 1,4-Phenylen-, 1,4-Naphthylen- oder 4,4′-Biphenylen-, worin die beiden Bindungen sich koaxial in entgegengesetzte Richtungen erstrecken, oder 1,5-Naphthylen-Reste, 2,6-Naphthylen-Reste oder 3,5′-Biphenylen-Reste, worin die beiden in entgegengesetzte Richtungen zeigenden Bin dungen parallel zueinander verschoben sind, sowie 1,3-Phenylen-Reste, 1,3-, 1,6-, 1,7- oder 2,7-Naphthylen-Reste oder 3,4′-Biphenylen-Reste, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren sind 1,4-Naphthalindicarbonsäure, 1,5-Naphthalindicarbonsäure, 2,6-Naphthalindicarbonsäure, Biphenyl-4,4′-dicarbonsäure, Bipenyl-3,3′-dicarbonsäure, Diphenoxyethan-4,4′-dicarbonsäure, Diphenylether-4,4′-dicarbonsäure, Methylterephthalsäure, Methoxyterephthalsäure, Chlorterephthalsäure, 4-Chlornaphthalin-2,7-dicarbonsäure, 2,6-oder 2,7-Naphthalindicarbonsäure, Biphenyl-3,4′-dicarbonsäure, 4-Methylisophthalsäure, 5-Methylisophthalsäure, Diphenylether-4,4′-dichlor-3,3′-dicarbonsäure, Iso- und Terephthalsäure.

Besonders bevorzugt sind Iso- und Terephthalsäure.

Es können sowohl ausschließlich aliphatische oder aromatische Dicarbonsäuren als auch Mischungen von beiden eingesetzt werden.

Als bivalente Reste ($R^5$) der Formel (II) kommen solche in Betracht, die den Aminoverbindungen der Formel (XI)

$H_2N$-$R^5$-Y (XI) zugrundeliegen,

worin

$R^5$ für $C_mH_{2m}$ mit m = 3 bis 40, bevorzugt 4 bis 12, und einen cycloaliphatischen Rest mit 5 bis 15 C-Atomen (5-6 Ring-C-Atomen), und

Y für OH, COOH oder $NH_2$ stehen, oder worin $R^5$

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen-, Naphthylen- und Biphenylen-Resten auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$-mit n = 1 bis 4 verbundene Phenylenreste.

Anstelle der aliphatischen Aminocarbonsäuren können auch die entsprechenden Lactame, z.B. Caprolactam anstatt von ε-Aminocapronsäure, eingesetzt werden.

Bevorzugte (cyclo)aliphatische Aminocarbonsäuren sind ε-Aminocapronsäure bzw. Caprolactam, ω-Aminoundecansäure, ω-Aminododecansäure bzw. Laurinlactam, 4-Aminocyclohexyl-carbonsäure; bevorzugte aromatische Aminocarbonsäuren sind 4-Aminobenzoesäure oder 6-Amino-2-naphthoesäure.

Besonders bevorzugt sind ε-Aminocapronsäure bzw. Caprolactam, 4-Aminobenzoesäure und 6-Amino-2-naphthoesäure.

Bevorzugte Aminophenole sind z.B.:

3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4′-Amino-1-hydroxybiphenyl, besonders bevorzugt sind 4-Aminophenol und 3-Aminophenol, sowie 4′-Amino-1-hydroxy-biphenyl.

Bevorzugte Oligomere der Formel (II) sind solche, die durchschnittlich 3 bis 25, besonders bevorzugt 4 bis 20, insbesondere 4 bis 15 aromatische Teilstrukturen enthalten, wobei eine aromatische Teilstruktur wie unter Formel (I) definiert ist.

Die Herstellung der obengenannten Verbindungen der Formel (II) erfolgt nach bekannten Schmelz- und Umesterungsverfahren, die auch zur Herstellung von thermotropen LC-Polymeren herangezogen werden (Direktveresterungsverfahren [EP-A 00 88 546], Acetatverfahren [EP-A 01 02 719, 134 204], Schmelzumesterung von Carbonsäurephenylestern mit Diphenolen (Diphenylesterverfahren) [EP-A 072 540, 070 539, 024 499, 45 499, DE-OS 20 25 971, EP 070 539 und EP 132 637]).

Die erfindungsgemäßen Verbindungen der Formel (II) werden besonders bevorzugt nach dem Acetat- und/oder nach dem Diphenylesterverfahren hergestellt. Es sind oligomere Gemische mit mittleren Molekulargewichten ( $\overline{M}n$) ≦4000, vorzugsweise ≦2500, welche sowohl ihre genannten Struktureinheiten wie auch ihr Molekulargewicht in statistischer Verteilung besitzen können und flüssig kristalline Eigenschaften aufweisen. Sie werden als LC-Additive 2) in den angegebenen Mengen zur Herstellung der neuen Polyamid-Formmassen und -Legierungen eingesetzt, wobei die flüssigkristallinen, von aliphatischen Bausteinen freien, oligomeren Verbindungen der Formel (II) bevorzugt sind, insbesondere in statistischer Verteilung der Komponenten in (II).

Die niedermolekularen, flüssigkristallinen Additive (II) werden zu 0,1-15, bevorzugt 0,3-8 und besonders bevorzugt 0,5-5 Gew.-% bei der Herstellung der erfindungsgemäßen Polyamid-Formmassen und -Legierungen eingesetzt. Sie können einzeln oder in einem beliebigen Gemisch eingesetzt werden.

Bevorzugt einzusetzende LC-Additive 2) sind die statistisch aufgebauten Verbindungen der Formel (II).

Gegenstand der Erfindung sind auch die neuen flüssigkristallinen Ester- und/oder Esteramid-Oligomeren der Formel (II), wobei die Symbole die bereits aufgeführten Bedeutungen haben.

Gegenstände der Erfindung sind weiterhin die Verwendung der erfindungsgemäßen Polyamid-Formmassen und -Legierungen zur Herstellung von Formkörpern, Folien, Fasern und anderen Gegenständen sowie Formkörper, Folien, Fasern und andere Gegenstände aus den neuen Polyamid-Formmassen und -Legierungen.

Polyamide:

Polyamide gemäß 1), welche erfindungsgemäß eingesetzt werden können, umfassen teilkristalline und amorphe Polyamide. Sie können einzeln oder in einem beliebigen Gemisch eingesetzt werden. Beispiele für Polyamide im Sinne der Erfindung sind PA 6, 11, 12, 46, 66, 67, 68, 69, 610, 1012, 612, 1010, 1212, 6/66-Copolyamide, 6/12-Copolyamide, 6/11-Copolyamide, 66/11-Copolyamide, 66/12-Copolyamide, 6/610-Copolyamide, 66/610-Copolyamide, 6/66/610-Terpolyamide, 6I6-Copolyamide, 6T6-Copolyamide, 6IT-Copolyamide, PA 6I, Copolyamide aus 1,4-Cyclohexandicarbonsäure, 2,2,4-und 2,4,4-Trimethylhexamethylendiamin, Copolyamide aus Terephthalsäure, 2,2,4- und 2,4,4-Trimethylhexamethylendiamin, Copolyamide aus Isophthalsäure, Laurinlactam und 3,5′-Dimethyl-4,4′-diamino-dicyclohexylmethan, Copolyamide aus Isophthalsäure, Azelainsäure und/oder Sebacinsäure und 4,4′-Diaminodicyclohexylmethan (bzw. Isomerengemische), Copolyamide aus Caprolactam, Isophthalsäure (+ ggf. Terephthalsäure) und 4,4′-Diaminodicyclohexylmethan (bzw. Isomerengemische), Copolyamide aus Caprolactam, Isophthalsäure (+ ggf. Terephthalsäure) und Isophorondiamin, Copolyamide aus Isophthalsäure (+ ggf. Terephthalsäure) und/oder anderen aromatischen oder aliphatischen Dicarbonsäuren, Hexamethylendiamin und/oder ggf. alkylsubstituierten Hexamethylendiaminen und in Nachbarschaft zu den Aminogruppen alkyl-substituierten 4,4′-Diaminodicyclohexylalkanen, sowie andere Copolyamide oder Gemische verschiedener Polyamide aus Komponenten, wie sie üblicherweise für Polyamide bekannt sind. Auch Polyamid-Blockpolymere wie Polyether- und Polyetheresteramide können eingesetzt werden.

Auch Polyamide, welche aus Dicarbonsäuren und Diisocyanaten herstellbar sind, sind geeignet (z.B. Copolyamide aus Adipinsäure, Azelainsäure und 4,4′-Diphenylmethandiisocyanat und Copolyamide aus Terephthalsäure, Azelainsäure, 4,4′-Diphenylmethandiisocyanat und 2,4-(2,6)-Toluylendiisocyanat).

Bevorzugte Polyamide, einzeln oder in einem beliebigen Gemisch, sind PA 6, 46, 66, 610, 1012, 11, 12, 1212, 6I6, 6I, 6T6, 6/66-Copolyamide, Copolyamide aus Caprolactam, Isophthalsäure und Isophorondiamin, Copolyamide aus Isophthalsäure (+ ggf. Terephthalsäsure), Azelainsäure und 4,4′-Diaminodicyclohexylmethan (bzw. Isomerengemische) und Copolyamide aus Isophthalsäure (+ ggf. Terephthalsäure), Caprolactam und 4,4′-Diaminodicyclohexylmethan (bzw. Isomerengemische).

Ganz besonders bevorzugt werden Polyamid 6 und 66 eingesetzt.

Legierungspartner für die Polyamid-Legierungen

Als Polymere Legierungspartner (einer der möglichen Zusatzstoffe gemäß 3)) zur Herstellung der neuen, leichtfließenden Polyamid-Legierungen, die immer neben den Polyamiden mindestens einen polymeren Legierungspartner enthalten, kommen, allein oder im Gemisch, z.B. in Betracht: Dienkautschuke, Acrylat-Kautschuke, Polyethylene, Polypropylene, Ethylen-Propylen-Copolymere, Ethylen-1-Buten-Copolymere, Ethylen-Propylen-Dien-Terpolymere, Ethylen-und/oder Propylen-Acrylsäure/Acrylester- Copolymere, Ethylen-Vinylacetat-Copolymere, Polyoctenylene, Polystyrole, (α-Methyl)Stryrol-(Meth)acrylnitrilcopolymere, (Meth)Acrylnitril-Butadien-(α-Methyl)Styrol-Polymere (ABS), schlagzähe Polystyrole, Polycarbonate, aromatische Polyester(carbonate), Polyester wie z.B. Polyethylenterephthalat, Polysulfone, Polyphenylenoxide, Polyetherketone, Polyetheretherketone, Polyamidimide, Polyethersulfone, Polyetherimide, Polyesterimide und Polyimide, wie sie im Stand der Technik als Legierungspartner bzw. Modifikatoren bekannt sind.

Die polymeren Legierungspartner sollten, gegebenenfalls zumindest teilweise, chemisch so modifiziert sein, daß eine partielle Ankopplung der beiden Phasen, z.B. über Carbonsäuregruppen, erfolgt. Dies kann z.B. dadurch geschehen, daß ein Copolymer aus Ethylen und/oder Propylen und geringen Mengen Acrylsäure, oder ein mit geringen Mengen Maleinsäureanhydrid gepfropftes Ethylen-Propylen-Dien-Polymer oder ein mit geringen Mengen Maleinsäureanhydrid gepfropftes Polyphenylenoxid allein oder im Gemisch mit unmodifizierten Legierungspartnern eingesetzt werden. Ankopplung kann auch über Ester- oder Epoxidgruppen erfolgen. Es kann weiter z.B. dadurch geschehen, daß geeignete niedermolekulare oder polymere Verträglichkeitsvermittler anwesend sind, z.B. kann in Legierungen mit ABS ein Acrylnitril-Styrol-Acrylsäure-Terpolymer als Verträglichkeitsvermittler eingesetzt werden. Die Legierungspartner können auch reaktive Endgruppen aufweisen, welche mit dem Polyamid reagieren können, z.B. Amino-oder Carboxyl-terminierte Polydien-Kautschuke.

Die Kautschuke können auch in einer Kern-Mantel-Struktur gepfropft sein.

Es können erfindungsgemäß auch Gemische aus Polyamiden mit mehr als einem Polymeren bzw. Legierungspartner erhalten werden, z.B. Legierungen aus Polyamid 66, Polyphenylenoxid und schlagzähem Polystyrol, oder Legierungen aus Polyamid 66, aromatischen Polyestern und einem Schlagzähmodifikator; bei solchen Gemischen sollte der Polyamid-Anteil nicht unter 30 Gew.-%, vorzugsweise nicht unter 50 Gew.-%, bezogen auf die fertige Mischung, betragen.

Die polymeren Legierungspartner können bereits vorab mit Polyamiden oder Mischungen von Polyamiden zu Polyamid-Legierungen (vor)vermischt werden, oder werden bevorzugt als einer der Zusatzstoffe entsprechend 3) eingesetzt. Dabei werden insbesondere mindestens ein Polyamid, mindestens ein polymerer Legierungspartner, mindestens ein LC-Additiv 2) gemäß Formel (I) und/oder (II) sowie gegebenenfalls weitere, übliche Zusatzstoffe 3) wie Glasfasern oder auch Stabilisatoren, in der Schmelze (vorzugsweise in Extrudern) vermischt.

Die polymeren Legierungspartner werden im allgemeinen in Mengen von mindestesn 5 Gew.-%, bezogen auf die fertige Mischung, eingesetzt.

Im Fall von Polyamid-Legierungen ist also neben den Polyamiden gemäß 1) und den LC-Fließverbesserern gemäß 2) immer mindestens ein Zusatzstoff gemäß 3), nämlich der polymere Legierungspartner, anwesend in der fertigen Polyamid-Legierung.

Gegenstand der Erfindung ist auch die Verwendung der flüssigkristallinen, niedermolekularen Ester und/oder Esteramide (I) und/oder der oligomeren Ester und/oder Esteramide (II) als LC-Fließverbesserungsmittel-Zusatz 2) in Mengen von 0,1 bis 15 Gew.-% (oder den obengenannten bevorzugten Mengen) bei der Herstellung von Polyamid-Formmassen und/oder Polyamid-Legierungen. Weiterhin ist Erfindungsgegenstand ein Verfahren zur Herstellung der neuen leichtfließenden Polyamid-Formmassen und -Legierungen durch Vermischen mindestens eines Polyamids 1), mindestens eines LC-Fließverbesserers (I) und/oder (II) 2) sowie gegebenenfalls der Zusatzstoffe gemäß 3) in der Schmelze, wobei gegebenenfalls die Zusatzstoffe gemäß 3) auch in einem gesonderten Schritt vorher in das Polyamid 1) eingebracht worden sein können, so daß dann unter 1) ein entsprechend modifiziertes Polyamid eingesetzt wird. Bevorzugt geschieht die Herstellung der neuen Polyamid-Formmassen und -Legierungen in Extrudern oder Knetern.

Der Zusatz von flüssig-kristallinen Polymeren zu Thermoplasten ist bekannt (siehe beispielsweise EP-OS 0 030 417). Ein Nachteil ist jedoch im allgemeinen die begrenzte Verträglichkeit der Thermoplasten mit den flüssig-kristallinen Polymeren.

Unschmelzbare, whiskerartige Poly-(p-oxybenzoat)kristalle werden in der US-Patentschrift 4 673 724 als Verstärkungskomponente beschrieben. Diese sind wegen ihrer sehr hohen Schmelz- bzw. Erweichungspunkte jedoch sehr schwer herstellbar und mit anderen Polymeren besonders unverträglich.

In situ erzeugte Mischungen aus flüssig-kristallinen Polymeren und amorphen Thermoplasten sind ebenfalls bekannt. (Siehe beispielsweise G. Kiss, Polymer Engineering & Science, 27, Seiten 410-423 (1987). Derartige Mischungen haben jedoch den Nachteil, daß die erreichbaren Verstärkungseffekte in starkem Maß von den Mischungsbedingungen abhängen und die Reproduzierbarkeit der Verarbeitungsbedingungen oft problematisch einzuhalten sind.

Hinzu kommt, daß bei der Herstellung derartiger Composites die Mischungspartner sehr unterschiedliche Schmelzviskositäten unter Verarbeitungsbedingungen besitzen, so daß zur Herstellung von solchen Composites nur eine beschränkte Zahl von geeigneten Polymeren bereitsteht.

Als Verarbeitungshilfsmittel für konventionelle Thermoplaste wie aromatische Polyester oder thermoplastisch schwer verarbeitbare, flüssigkristalline Polymere werden chemisch reaktive, flüssig-kristalline, aromatische Ester beschrieben, die durch Umesterung bei höherer Temperatur in die Polymerkette einkondensieren. (Siehe US-Patent 4 650 836). Der Einbau der aromatischen, flüssig-kristallinen Ester in die Polymerkette führt jedoch zu einer chemischen Veränderung der Thermoplasten. Dies hat den Nachteil, daß in Abhängigkeit der Verarbeitungsbedingungen unterschiedliche Einbauverhältnisse und damit schlecht reproduzierbare Eigenschaften resultieren.

Die Herstellung der erfindungsgemäßen, leichtfließenden Formmassen und -Legierungen kann nach allen in der Thermoplast-Verarbeitung zur Abmischung üblichen Verfahren geschehen, wobei bevorzugt solche Bedingungen (Verweilzeiten/Temperaturen) eingehalten werden sollten, daß keine bzw. nur eine geringe Umesterung erfolgt und die flüssigkristallinen Additive im wesentlichen unreagiert vorliegen.

Zur Herstellung der erfindungsgemäßen, LC-Fließverbesserer 2) enthaltenden, leicht fließenden Polyamid-Formmassen und/oder Polyamidlegierungen können beispielsweise die Polyamidkomponente(n) 1), die LC-Fließverbesserer (I) und/oder (II) 2) sowie die gegebenenfalls einzusetzenden Zusatzstoffe 3) (z.B. Legierungskomponenten, Verstärkungsstoffe, Stabilisatoren u.a.) in der Schmelze miteinander vermischt werden. Vorzugsweise werden die erfindungsgemäßen Polyamid-Formmassen und -Legierungen durch Mischen aller Ausgangskomponenten in üblichen Schneckenmaschinen hergestellt. Die flüssigkristalline LC-Fließverbesserer 2) kann dabei anfangs mit der Polyamid-Komponente 1) schon gemeinsam in den Extruder eindosiert oder erst zu einem späteren Zeitpunkt während der Extrusion den zu extrudierenden Massen zugesetzt werden.

Die LC-Fließverbesserer 2) (I) und/oder II) können also zu jedem Zeitpunkt bei der Herstellung der erfindungsgemäßen Formmassen und Legierungen eingesetzt werden. Auch ein Zusatz unmittelbar vor der Verarbeitung von Polyamid-Formmassen und -Legierungen ist möglich.

Die LC-Additive 2) können als solche oder auch in Form von Konzentraten in einem (vorzugsweise gleich hoch oder niedrigerschmelzenden) Polymeren zugegeben werden.

Die Polyamide 1) können die Zusatzstoffe gemäß 3) bereits vorher eingemischt enthalten. Bevorzugt werden aber diese Komponenten 3) zusammen mit den flüssigkristallinen Komponenten 2) und den Polyamiden 1) in einem Arbeitsgang vermischt.

Die erfindungsgemäß mit LC-Fließverbesserern 2) modifizierten, leicht fließenden PA-Formmassen und -Legierungen können noch weitere, übliche Zusatzstoffe 3) in der Menge von 0,001 bis 150 Gew.-%, bevorzugt 0,01 bis 100 Gew.-%, bezogen auf die Summe der Gewichte von 1) und 2), enthalten. Hier kommen Verstärkungsmaterialien (Glasfasern, Aramidfasern, Kohlenstoffasern, Glaskugeln, $SiO_2$, Kreide, Talkum, Kaolin, Glimmer u.a.), Weichmacher, Antioxidantien, Pigmente, Farbstoffe, Bewitterungsstabilisatoren (bzw. Stabilisatorkombinationen), Gleitmittel, Fließhilfsmittel, Entformungsmittel, Nukleierungsmittel, die Wasseraufnahme verringernde Zusätze (z.B. Monophenole, Bisphenole, (Alkyl)phenol-Formaldehyd-Kondensate u.a.), Flammschutzmittel und andere in Frage, wie sie für entsprechende Polyamidmassen grundsätzlich bekannt und vorgeschlagen sind. Die Zusatzstoffe gemäß 3) können unabhängig voneinander für sich oder in Form eines Konzentrats eingesetzt werden. Sie können aber auch schon ganz oder teilweise in den Polyamiden 1) enthalten sein.

Die erfindungsgemäßen Polyamid-Formmassen und -Legierungen können z.B. nach den Verfahren des Spritzgießens und der Extrusion zu Formkörpern und anderen Gegenständen verarbeitet werden. Sie eignen sich aufgrund ihrer drastisch verbesserten Fließfähigkeit insbesondere für großflächige und komplizierte Formteile, die sonst nur mit hohem technischem Aufwand bei der Verarbeitung, oft mit Oberflächenstörungen, oder häufig auch gar nicht, hergestellt werden können.

Vorzugsweise eignen sie sich für Anwendungen im Automobilbau.

Die erfindungsgemäßen PA-Formmassen und -Legierungen zeichnen sich schon bei einer geringen Einsatzmenge an LC-Additiv 2) durch eine drastisch erhöhte Fließfähigkeit sowie gegebenenfalls auch durch verbesserte mechanische Eigenschaften und Wärmebeständigkeiten aus. Sie können sich weiterhin durch verringerte Wasseraufnahme sowie höhere Kristallisationsgeschwindigkeit und Kristallisationsgrad auszeichnen. Sie sind somit eine wertvolle Bereicherung des Standes der Technik.

Die folgenden Beispiele dienen zur Erläuterung der Erfindung, ohne sie darauf einzuschränken.

$\eta_{rel}$-Werte wurden bei 25°C in m-Kresol anhand einer 1%igen Lösung bestimmt.

## Beispiele

### Beispiel 1

(Ausgangsmaterial nicht erfindungsgemäß) Beispiel für 4-Kern-Verbindungen der Formel I.

Herstellungsbeispiel eines der erfindungsgemäß einzusetzenden, niedermolekularen, flüssigkristallinen Esters, gemäß P 3 824 365.2.

1. Stufe: 4-Hydroxyphenyl-4-hydroxybenzoat

138,1 g p-Hydroxybenzoesäure und 110,1 g Hydrochinon werden zusammen mit 2 g Borsäure und 2,5 g Schwefelsäure in 900 ml Xylol suspendiert und bis zum Ende der Wasserabspaltung unter Rückfluß erhitzt. Das Produkt wird abgesaugt, getrocknet und mit verdünnter Na-Bicarbonat-Lösung gewaschen, erneut getrocknet und in 500 ml Aceton gelöst. Die Lösung wird heiß vom Ungelösten abfiltriert und das Produkt aus Wasser gefällt, abgesaugt und getrocknet.
Ausbeute: 182 g
Schmp.: 245-247 °C

2. Stufe: 4-(4-Methylbenzoyloxy)-benzoesäure-4-(4-methyl-benzoyloxy)-phenylester.

345,3 g 4-Hydroxyphenyl-4-hydroxybenzoat werden mit 249 g Pyridin in 3000 ml Methylenchlorid suspendiert und bei 0 °C innerhalb von 3 h mit 460 g 4-Methylbenzoesäure chlorid versetzt. Das Reaktionsgemisch wird bei Raumtemperatur 14 h nachgerührt. Das Lösungsmittel wird i.Vak. abdestilliert und der Rückstand mit 1,4 l 5 %iger Salzsäure aufgerührt. Das unlösliche Produkt wurde abgesaugt, mit Wasser neutral gewaschen und getrocknet.
Ausbeute: 643 g (85 % d.Th.)
Im Bereich von 190-350 °C kann unter dem Polarisationsmikroskop eine flüssigkristalline Phase festgestellt werden.

Beispiele 2-4 (erfinderische Verwendung)

Polyamid 6-Granulat ($\eta_{rel}$ = 2,9) wurde mit 5, 10 und 15 Gew.-% 4-(4-Methylbenzoyloxy)-benzoesäure-4-(4-methylbenzoyloxy)phenylester (LC-Ester Nr. 6 nach Beispiel 1 vom Typ (I)) vermischt und über einen Einwellenextruder bei 270 °C extrudiert.
Der austretende Strang wurde in einem Wasserbad abgekühlt, anschließend gehäckselt und getrocknet. Schmelzviskositäten und $\eta_{rel}$-Werte der Polyamide sind in Tabelle 1 zusammengefaßt.

Beispiele 5-7

In der in den vorhergehenden Beispielen beschriebenen Weise wurde entsprechendes PA 6-Granulat mit 5, 10 und 15 Gew.-% 4-(4-Methoxybenzoyloxy)-benzoesäure-4-(4-methoxybenzoyloxy)-phenylester (LC-Ester Nr. 7 vom Typ (I)) extrudiert.
Die Schmelzviskositäten der Polyamide sind in Tabelle 1 zusammengestellt.

Beispiele 8-11

PA 6-Granulat ($\eta_{rel}$ = 2,9) wurde mit 1 bzw. 2 Gew.-% 4-(4-Methylbenzoyloxy)-benzoesäure-4-(4-methylbenzoyloxy)phenylester (LC-Ester Nr. 6), 4-(4-Methoxybenzoyloxy)benzoesäure-4-(4-methoxybenzoyloxy)-phenylester (LC-Ester Nr. 7) und 4-Benzoyloxy-benzoesäure-4-(4-benzoyloxy)-phenylester (LC-Ester Nr. 5) trocken vermischt und über einen ZSK 53-Doppelwellenextruder bei 270 °C und einem Durchsatz von 24 kg $h^{-1}$ extrudiert. Die austretenden Stränge wurden in einem Wasserbad abgekühlt, das Polymere granuliert und getrocknet.
Schmelzviskositäten sowie Arbeitsaufnahmewerte des Extruders sind in Tabelle 1 zusammengefaßt.

Vergleichsbeispiel 1

In der in den Beispielen 8-11 angegebenen Weise wurde das PA 6-Granulat ohne den Zusatz eines der niedermolekularen, flüssigkristallinen Additive extrudiert. Die Arbeitsaufnahme des Extruders ist in Tabelle 1 verzeichnet.

Tabelle 1

| Beispiel | Menge Gew.-% | LC-Ester Additiv, | SV*) (Pa s) | A**) (A) | ηrel |
|---|---|---|---|---|---|
| 2 | 5 % | Nr. 6 | 15 | - | 2,7 |
| 3 | 10 % | Nr. 6 | 4 | - | 2,7 |
| 4 | 15 % | Nr. 6 | 2,5 | - | 2,6 |
| 5 | 5 % | Nr. 7 | 8 | - | |
| 6 | 10 % | Nr. 7 | 3,6 | - | |
| 7 | 15 % | Nr. 7 | 2,2 | - | |
| 8 | 1 % | Nr. 6 | 85 | 20 | 2,8 |
| 9 | 2 % | Nr. 6 | - | 16 | 2,7 |
| 10 | 1 % | Nr. 7 | - | 19 | 2,7 |
| 11 | 1 % | Nr. 5 | 85 | 20 | 2,7 |
| Vgl. 1 | - | | 165 | 26 | 2,9 |
| Ausgangsgranulat | - | | 165 | - | 2,9 |

*) Schmelzviskosität bei 270° C und 100 $s^{-1}$
**) Arbeitsaufnahme im Extruder in Ampere. Sie ist ein Maß für die Fließfähigkeit

Beispiele 12 und 13

PA 6I (ein amorphes Polyamid aus Isophthalsäure und Hexamethylendiamin) wurde mit 1 und 5 Gew.-% 4-Methoxybenzoyloxy-4-(4-methylbenzoyloxy)benzol (LC-Ester Nr. 1) in der in den Beispielen 1-3 angegebenen Weise bei 270° C extrudiert.
Schmelzviskositäten, $\eta_{rel}$-Werte sowie thermische Eigenschaften sind in Tabelle 2 zusammengefaßt.

Tabelle 2

| Beispiel | Menge (Gew.-%) | ηrel | SV *) |
|---|---|---|---|
| 12 | 1 | 2,8 | 2700 |
| 13 | 5 | 2,7 | 1600 |
| Ausgangsgranulat | - | 3,0 | 4500 |

*) SV = Schmelzviskosität bei 270° C und einem Schergefälle von 1 $s^{-1}$, in Pas.

Beispiel 14 (erfindungsgemäß; Typ II).

Herstellungsbeispiel durch Schmelz-Umesterung.

138 g p-Hydroxybenzoesäure, 110 g Hydrochinon und 242 g Benzoesäure werden in Gegenwart von

0,4 g Bleiacetat und 312 g Acetanhydrid von 140 °C bis zum Beginn der Essigsäureabspaltung erhitzt. Bei nachlassender Destillationsgeschwindigkeit wird die Temperatur schrittweise bis auf 300 °C erhöht, bis die Essigsäureabspaltung beendet ist. Das Reaktionsprodukt wird in Xylol gefällt, abgesaugt, mit kaltem Xylol und Petrolether gewaschen und getrocknet. Ausbeute: 90-95 %.

Die statistisch aufgebaute Substanz vom Typ II zeigt unter dem Polarisationsmikroskop im Bereich von 190 bis 350 °C eine flüssigkristalline Phase.

Beispiele 15-17

In der für die Beispiele 8-11 erläuterten Weise wurde ein 30 % Glasfaser-verstärktes PA 6-Granulat mit 1 und 3 Gew.-% des nach Beispiel 14 hergestellten LC-Esters vom Typ II, bzw. ohne LC-Additiv bei 260 °C extrudiert. Die Werte für die Arbeitsaufnahme des Extruders sind in Tabelle 3 zusammengestellt.

Beispiel 18-20

In der für die Beispiele 8-11 beschriebenen Weise wurde ein 30 % Glasfaser-verstärktes PA 66-Granulat mit 1 bzw. 3 Gew.-% des nach Beispiel 14 hergestellten Esters vom Typ II und ohne Zusatz eines LC-Additivs bei 280 °C extrudiert.
Die Werte für die Arbeitsaufnahme des Extruders sind in Tabelle 3 zusammengefaßt.

Beispiele 21 und 22

In der für die Beispiele 8-11 beschriebenen Weise wurde ein amorphes Copolyamid aus Isophthalsäure (21,5 Gew.-Tle), 4,4′-Diaminodicyclohexylmethan (54,3 Gew.-Tle) und Azelainsäure (24,3 Gew.-Tle) mit 1 Gew.-% des nach Beispiel 14 hergestellten Esters bzw. ohne LC-Additiv bei 280 °C extrudiert.
Die Werte für die Arbeitsaufnahme des Extruders sind in Tabelle 3 zusammengefaßt.

Tabelle 3

| Beispiel | Menge Additiv (Gew.-%) | A (Ampere) |
|---|---|---|
| 15 | 1 | 28 |
| 16 | 3 | 24 |
| 17 | ohne | 40 |
| 18 | 1 | 28 |
| 19 | 3 | 22 |
| 20 | ohne | 40 |
| 21 | 1 | 44 |
| 22 | ohne | 70-90 |

Die Beispiele zeigen, daß die erfindungsgemäß einzusetzenden niedermolekularen, flüssigkristallinen Additive schon in sehr geringen Mengen die Fließfähigkeit von PA-Formmassen drastisch erhöhen.

Beispiele 23 und 24

Eine Polyamidlegierung aus 70 Gew.-% PA 6 mit einer relativen Viskosität von 2,9 und 30 Gew.-% eines Elastomeren (Pfropfpolymerisat aus 80 % Pfropfgrundlage aus vernetztem Polybutadien, Gelgehalt >70 %, gemessen in Toluol-, und 20 % Pfropfauflage aus Methylmethacrylat) wurde mit 1 bzw. 3 Gew.-% des statistisch aufgebauten Esters nach Beispiel 14) trocken vermischt und bei 260 °C und einem Durchsatz von 24 kg $h^{-1}$ über einen ZSK 53-Doppelwellenextruder extrudiert. Die austretenden Stränge wurden in einem Wasserbad abgekühlt, granuliert und getrocknet. Die Arbeitsaufnahmewerte des Extruders sind in Tabelle 4 zusammengestellt.

Vergleichsbeispiel 2)

In der für die Beispiele 23 und 24 beschriebenen Weise wurde dieselbe Legierung ohne Zusatz eines der erfindungsgemäß einzusetzenden Additive extrudiert. Die Arbeitsaufnahme des Extruders ist in Tabelle 4 aufgeführt.

Beispiel 25 und 26

Eine Polymerlegierung auf Basis eines teilkristallinen Polyamids und eines Polyphenylenoxids (Noryl® GTX 620, General Electric Company) wurde mit 1 bzw. 3 % 4-Benzoyloxy-benzoesäure-4-(4-benzoyloxy)-phenylester (LC-Ester Nr. 5 vom Typ (I), hergestellt aus 4-Hydroxyphenyl-4-hydroxybenzoat und Benzoesäurechlorid in Methylenchlorid/Pyridin - flüssigkristalliner Bereich 190 - 290 °C im Polarisationsmikroskop -) trocken vermischt und bei 280 °C über einen Einwellenextruder extrudiert. Der austretende Strang wurde in einem Wasserbad abgekühlt, anschließend gehäckselt und getrocknet.
Schmelzviskositätswerte sind in Tabelle 4 zusammengestellt.

Vergleichsbeispiel 3)

In der für die Beispiele 25 und 26 beschriebenen Weise wurde dieselbe Legierung ohne Zusatz eines der erfindungsgemäß einzusetzenden Additive extrudiert. Die Schmelzviskosität ist in Tabelle 4 aufgeführt.

Tabelle 4

| Beispiel | Additiv (Gew.-%) | | A* (A) | SV** (in [Pa.s]) bei $1s^{-1}$ | bei $10s^{-1}$ |
|---|---|---|---|---|---|
| 23 | 1 % | 5 | 26 (bei 260° C) | - | - |
| 24 | 3 % | 5 | 22 (bei 260° C) | - | - |
| Vergleich 2 | - | | 35 (bei 260° C) | - | - |
| 25 | 1 % | 5 | - nicht bestimmt | 2100 | 520 |
| 26 | 3 % | 5 | - nicht bestimmt | 590 | 140 |
| Vergleich 3 | - | | - nicht bestimmt | 5500 | 2300 |
| 27 | 1 % | 5 | 46 (bei 290° C) | | |
| Vergleich 4 | - | - | 58 (bei 290° C) | | |

* A ist die Arbeitsaufnahme des Extruders bei der Verarbeitung in Ampere, ein Maß für die Fließfähig-

keit. Niedrigere Werte bedeuten eine bessere Fließfähigkeit.

** SV ist die Schmelzviskosität (in Pas) bei 270° C, gemessen mit einem Contraves RM 300 Platte-Kegel-Viskosimeter bei Schergefällen 1 $sec^{-1}$ bzw. 10 $s^{-1}$.

Die Beispiele zeigen, daß die erfindungsgemäß einzusetzenden niedermolekularen, flüssigkristallinen Ester und/oder Esteramide schon in sehr geringen Mengen auch die Fließfähigkeit von PA-Legierungen drastisch erhöhen.

Beispiel 27

PA 46 (Stanyl®, ein Produkt der DSM) wurde mit 1% LC-Ester vom Beispiel Nr. 14 trocken vermischt und bei 290° C und einem Durchsatz von 30 kg/$h^{-1}$ über einen ZSK-53-Doppelwellenextruder compoundiert. Die Arbeitsaufnahme des Extruders ist in Tabelle 4 enthalten.

Die Verringerung der Wasseraufnahme sowie die Erhöhung der Kristallisationsgeschwindigkeit und des Kristallisationsgrades ($\Delta H_S$) des PA durch das LC-Additiv 2) wird in den Tabellen 5 und 6 demonstriert.

Vergleichsbeispiel 4

Beispiel 27 wurde ohne Zusatz des LC-Esters wiederholt. Die Arbeitsaufnahme des Extruders ist auch in Tabelle 4 enthalten.

Tabelle 5

| $H_2O$-Aufnahme in % nach x (h) (70° C) | Beispiel | |
|---|---|---|
| | 27 | Vgl. 4 |
| 1 | 1,50 | 1,75 |
| 2 | 2,09 | 2,49 |
| 4 | 2,84 | 3,60 |
| 8 | 4,01 | 5,05 |
| 24 | 7,14 | 8,91 |
| 48 | 9,83 | 11,82 |
| 120 h | 11,04 | 12,74 |

Tabelle 6

| | 1) | 2) | 3) | |
|---|---|---|---|---|
| | $T_K$[°C] | $\Delta H_S$[J/g] | $t_k$ [min] | |
| | | | 260°C | 265°C |
| Bsp. 27 | 242,5 | 80,2 | 0,33-0,40 | 0,95-1,0 |
| Vgl. 4 | 241,7 | 76,8 | 0,36 | 1,25-1,28 |

1) Maximum der DSC-Kristallisationsexothermen beim Abkühlen aus der Schmelze, 40°C/min Kühlrate
2) Schmelzwärme, bestimmt mittels DSC
3) Isotherme Kristallisationszeit bestimmt mittels DSC.

Beispiele 28 und 29

In Analogie zu Beispiel 8) wurde das dort benutzte PA-6-Granulat mit 1 % (Beispiel 28) bzw. 3 % (Beispiel 29) an LC-Ester (hergestellt nach Beispiel 14) extrudiert. Das erhaltene Granulat wurde zu Prüfkörpern verspritzt, an denen folgende mechanische Eigenschaften gemessen wurden (s. Tabelle 7).

Vergleichsbeispiel 5

In derselben Weise wie bei Beispiel 28/29 wurden die Eigenschaften des PA-6, ohne LC-Ester-Zusätze, geprüft (s. Tabelle 7).

Tabelle 7

| | Zusatz LC-Ester | Zug-E-Modul [MPa] | Reißfestigkeit [MPa] | Schlagzähigkeit $a_N$ nach ISO-180/Methode 1c |
|---|---|---|---|---|
| Beispiel 28 | 1 % | 3189 | 50,4 | 9 x nicht gebrochen<br>1 x 25,1 |
| Beispiel 29 | 3 % | 3256 | 71,4 | 9 x nicht gebrochen<br>1 x 316,6 |
| Vergleichsbeispiel 5 | - | 2688 | 47,8 | nicht gebrochen |

Die Ergebnisse zeigen, daß durch den erfindungsgemäßen Zusatz der LC-Fließverbesserer neben der Fließfähigkeit auch die mechanischen Eigenschaften wie Zug-E-Modul und Reißfestigkeit, bei weiter guter Schlagzähigkeit, verbessert werden können.

Weitere Beispiele zur Herstellung von LC-Oligomeren der Formel II durch Schmelzumesterung:

Beispiel 30

(erfindungsgemäße, statistisch aufgebaute LC-Ester(amide)

In einem Reaktionsgefäß mit Rührer, Kolonne und Destillierbrücke werden
276,0 g p-Hydroxybenzoesäure
220,0 g Hydrochinon
488,0 g Benzoesäure
0,8 g Magnesium und
624,2 g Acetanhydrid
eingewogen.

Bei einer Innentemperatur von 160° C begann die Abspaltung der Essigsäure. Mit nachlassender Destillationsgeschwindigkeit wurde die Reaktionstemperatur langsam auf 250° C erhöht.

Nach Beendigung der Destillation wurde der Druck im Verlauf von 30 Min. bis auf 1 mbar gesenkt. Während der Vakuumphase wurden restliche Mengen an Essigsäure im Verlauf von 2 Stunden abgespalten.

Das Produkt wurde in eine Weißblechdose abgefüllt und nach dem Erkalten zerkleinert.
Ausbeute: 876 g.

Im Bereich zwischen 190 und 350° C wurde mittels Polarisationsmikroskopie eine flüssigkristalline Phase festgestellt.

Beispiel 31

Analog zur Vorschrift in Beispiel 30 werden
193,2 g p-Hydroxybenzoesäure
260,4 g 4,4′-Dihydroxydiphenyl
341,6 g Benzoesäure
0,07 g Magnesium und
437,0 g Acetanhydrid
eingewogen und umgesetzt.
Ausbeute: 698 g.

Im Bereich von 180 und 320° C wurde mittels Polarisationsmikroskopie eine flüssigkristalline Phase festgestellt.

Beispiel 32

Analog zur Vorschrift in Beispiel 30 werden
207,0 g p-Hydroxybenzoesäure
165,0 g Hydrochinon
166,0 g Isophthalsäure
122,0 g Benzoesäure
0,06 g Magnesium und
468,0 g Acetanhydrid
eingewogen und umgesetzt.
Ausbeute: 560 g.

Im Bereich von 220 und 320° C wurde mittels Polarisationsmikroskopie eine flüssigkristalline Phase festgestellt.

Beispiel 33

Analog zur Vorschrift in Beispiel 30 werden
222,0 g p-Methoxybenzoesäure
265,0 g Hydrochinon
204,0 g p-Methylbenzoesäure
312,0 g Acetanhydrid und
0,05 g Magnesium
eingewogen und zur Umsetzung gegracht.
Ausbeute: 460 g

Im Temperaturbereich von 195 - 275° C liegt eine flüssigkristalline Phase vor.

Beispiel 34

Herstellungsvorschrift:

Herstellung eines niedermolekularen, flüssigkristallinen Esters nach Formel (II) mit 10 aromatischen

Teilstrukturen durch Schmelzveresterung.

In einen 25 l-Autoklaven wurden 3,31 kg p-Hydroxybenzoesäure, 2,64 kg Hydrochinon, 1,95 kg Benzoesäure, 2,66 kg Isophthalsäure, 7,49 kg Acetanhydrid und 0,91 kg Magnesiumpulver eingewogen. Unter einem $N_2$-Strom von 40 l $h^{-1}$ wurde auf 150° C aufgeheizt. Nach Erreichen dieser Temperatur wurde eine halbe Stunde lang gehalten, wobei kräftig gerührt wurde. Anschließend wurde bei nachlassender Destillationsgeschwindigkeit unter Rühren schrittweise auf 270° C aufgeheizt, wobei zuletzt ein Vakuum von 30 mbar angelegt wurde. Das Produkt wurde aus dem Kessel abgelassen und zerkleinert.

Ausbeute: 8,87 kg (96 %).

Die statistisch aufgebaute Substanz vom Typ II zeigt unter dem Polarisationsmikroskop im Bereich von 190 bis 350° C eine flüssigkristalline Phase.

Beispiele 35 - 37

Polyamid 6-Granulat ($\eta_{rel}$ = 2,9) wurde mit 1 bzw. 3 Gew.-% eines statistisch aufgebauten LC-Esters der Formel (II) mit im Schnitt 10 aromatischen Teilstrukturen auf Basis von Benzoesäure (18,5 Gew.-%), p-Hydroxybenzoesäure (31,3 Gew.-%), Hydrochinon (25 Gew.-%) und Isophthalsäure (25,2 Gew.-%), hergestellt nach Beispiel 34, compoundiert und anschließend zu Prüfstäben verarbeitet. Die Fließlängen, mechanischen Eigenschaften sowie die Wasseraufnahme sind mit denen des Vergleichs in Tabelle 8 zusammengestellt.

Tabelle 8

| | Bsp.35 | Bsp.36 | Bsp.37 |
|---|---|---|---|
| Polyamid 6 % | 100 | 99 | 97 |
| LC-Ester nach Bsp. 34) % | -- | 1 | 3 |
| Fließspirale (flow spiral) cm (270° C/103 bar) | 56 | 68 | 91 |
| Reißfestigkeit MPa | 46 | 43 | 49 |
| Reißdehnung % | 116 | 61 | 51 |
| Zug-E-Modul MPa | 2827 | 2926 | 2989 |
| $\sigma_b$ 3,5 % MPa | 71 | 85 | 88 |
| $\sigma_{bB}$ MPa | 93 | 107 | 111 |
| Randfaserdehnung % | 6,5 | 6,1 | 6,2 |
| Biege-E-Modul MPa | 2039 | 2417 | 2507 |
| $a_n$ kJ/m² | ng | ng | ng |
| $a_k$ kJ/m² | 3,8 | 3,9 | 3,5 |
| IZOD $a_k$ RT kJ/m² | 7,5 | 8,7 | 8,0 |
| -30° C kJ/m² | 4,6 | 5,5 | 5,1 |
| HDT A °C | 63 | 61 | 63 |
| B °C | 181 | 184 | 182 |
| Wasseraufnahme 70° C/Stunden 1 % | 1,44 | 1,14 | 1,04 |
| 2 % | 1,77 | 1,47 | 1,30 |
| 4 % | 2,14 | 1,83 | 1,60 |
| 8 % | 3,11 | 2,64 | 2,29 |
| 24 % | 7,07 | 6,26 | 5,34 |
| 48 % | 9,13 | 8,20 | 7,27 |
| 120 % | 9,12 | 8,42 | 7,62 |

Beispiele 38-40

Polyamid 6-Granulat ($\eta_{rel}$ ~ 4,0) wurde mit 1 bzw. 3 Gew.-% 4-Benzoyloxybenzoesäure-4-(4-benzoyloxy)phenylester (LC-Ester Nr. 5) compoundiert.

Die Fließlängen, mechanischen Eigenschaften sowie die Wasseraufnahme sind in Tabelle 9 zusammengestellt.

Tabelle 9

| | Bsp.38 | Bsp.39 | Bsp.40 |
|---|---|---|---|
| Polyamid 6 % | 100 | 99 | 97 |
| LC-Ester Nr. 5 % | -- | 1 | 3 |
| Fließspirale cm (270 °C/103 bar) | 27 | 32 | 93 |
| Reißfestigkeit MPa | 46 | 50 | 43 |
| Reißdehnung % | 203 | 200 | 70 |
| Zug-E-Modul MPa | 2737 | 2856 | 2950 |
| $\sigma_b$ 3,5 % MPa | 65 | 65 | 66 |
| $\sigma_{bB}$ MPa | 87 | 85 | 89 |
| Randfaserdehnung % | 6,6 | 6,7 | 6,8 |
| Biege-E-Modul MPa | 1855 | 1846 | 1913 |
| IZOD $a_k$ RT kJ/m² | 7,7 | 7,3 | 6,3 |
| -30 °C kJ/m² | 3,9 | 4,7 | 5,0 |
| HDT A °C | 60 | 58 | 62 |
| B °C | 174 | 186 | 178 |
| Wasseraufnahme 70 °C/Stunden 1 % | 1,66 | 0,98 | 0,78 |
| 2 % | 2,00 | 1,40 | 1,03 |
| 4 % | 2,36 | 1,77 | 1,31 |
| 8 % | 3,19 | 2,60 | 1,92 |
| 24 % | 7,64 | 7,01 | 5,26 |
| 48 % | 9,76 | 9,02 | 7,33 |
| 120 % | 9,70 | 8,98 | 7,54 |

Beispiele 41-43

Es wurden mit 1 bzw. 3 Gew.-% 4-Benzoyloxybenzoesäure-4-(4-benzoyloxy)-phenylester (LC-Ester Nr. 5) modifizierte, 50 % glasfaserverstärkte Polyamid 6-Compounds hergestellt. Die Fließlängen, mechanischen Eigenschaften und Wasseraufnahme sind in Tabelle 10 zusammengestellt.

Tabelle 10

| | Bsp.41 | Bsp.42 | Bsp.43 |
|---|---|---|---|
| Polyamid 6/50 % GF % | 100 | 99 | 97 |
| LC-Ester Nr. 5 % | -- | 1 | 3 |
| Fließspirale cm (270 °C/103 bar) | 26 | 44 | 93 |
| Reißfestigkeit MPa | 197 | 202 | 208 |
| Reißdehnung % | 3,4 | 3,2 | 2,4 |
| Zug-E-Modul MPa | 14972 | 15105 | 15534 |
| $\sigma_b$ 3,5 % MPa | 315 | 314 | 334 |
| $\sigma_{bB}$ MPa | 339 | 337 | 341 |
| Randfaserdehnung % | 4,5 | 4,4 | 3,7 |
| Biege-E-Modul MPa | 11876 | 11600 | 11957 |
| $a_n$ kJ/m² | 59 | 63 | 38 |
| $a_k$ kJ/m² | 19,4 | 15,2 | 13,9 |
| IZOD $a_k$ RT kJ/m² | 20,6 | 18,2 | 13,3 |
| -30 °C kJ/m² | 15,7 | 14,8 | 12,4 |
| HDT A °C | 210 | 209 | 211 |
| B °C | 222 | 220 | 217 |
| Wasseraufnahme 70 °C/Stunden 1 % | 0,58 | 0,35 | 0,29 |
| 2 % | 0,73 | 0,48 | 0,39 |
| 4 % | 0,91 | 0,61 | 0,50 |
| 8 % | 1,30 | 0,94 | 0,70 |
| 24 % | 2,81 | 2,27 | 1,76 |
| 48 % | 3,87 | 3,20 | 2,58 |
| 120 % | 4,08 | 3,60 | 2,97 |

Beispiele 44-46

Es wurden mit 1 bzw. 3 Gew.-% 4-Benzoyloxybenzoesäure-4-(4-benzoyloxy)-phenylester (LC-Ester Nr. 5) modifizierte, 40 % mineralverstärkte Polyamid 6-Compounds hergestellt. Die Fließlängen, mechanischen Eigenschaften und Wasseraufnahme sind in Tabelle 10 zusammengestellt.

Tabelle 11

| | Bsp.44 | Bsp.45 | Bsp.46 |
|---|---|---|---|
| Polyamid 6/40 % MF % | 100 | 99 | 97 |
| LC-Ester Nr. 5 % | -- | 1 | 3 |
| Fließspirale cm (270 °C/103 bar) | 28 | 34 | 87 |
| Reißfestigkeit MPa | 86 | 88 | 92 |
| Zug-E-Modul MPa | 5770 | 5944 | 6257 |
| $\sigma_b$ 3,5 % MPa | 115 | 116 | 125 |
| $\sigma_{bB}$ MPa | 128 | 129 | 138 |
| Randfaserdehnung % | 7,3 | 6,0 | 5,5 |
| Biege-E-Modul MPa | 4248 | 4265 | 4580 |
| IZOD $a_k$ RT $kJ/m^2$ | 7,8 | 6,8 | 4,3 |
| -30 °C $kJ/m^2$ | 5,7 | 6,2 | 3,7 |
| Wasseraufnahme 70 °C/Stunden 1 % | 0,69 | 0,43 | 0,40 |
| 2 % | 0,84 | 0,58 | 0,53 |
| 4 % | 1,18 | 0,73 | 0,68 |
| 8 % | 1,65 | 1,21 | 0,99 |
| 24 % | 3,75 | 2,97 | 2,56 |
| 48 % | 5,18 | 4,46 | 3,79 |
| 120 % | 5,33 | 5,15 | 4,45 |

Vergleichsbeispiele 6 + 7

In der für die Beispiele 2-4 beschriebenen Weise wurden Polyamid 6-Granulat, modifiziert mit 3 % Dibenzoylhydrochinon

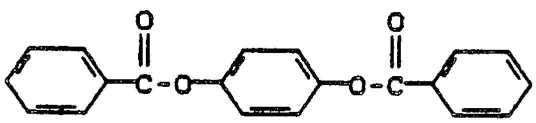

(nicht flüssig-kristallin), sowie das reine Polyamid 6-Granulat extrudiert. Die Schmelzviskosität beider Proben war praktisch identisch.

## Ansprüche

1. Leichtfließende Polyamid-Formmassen und -Legierungen, dadurch gekennzeichnet, daß sie durch Vermischen von

1) 85-99,9 Gew.-% an sich bekannter Polyamide mit

2) 0,1-15 Gew.-% (bezogen auf die Summe der Gewichte 1) plus 2)), vorzugsweise 0,3 bis 8 Gew.-%, besonders bevorzugt 0,5 bis 5 Gew.-% spezieller, niedermolekularer, flüssigkristalliner Ester und/oder Esteramide der allgemeinen Formel (I)

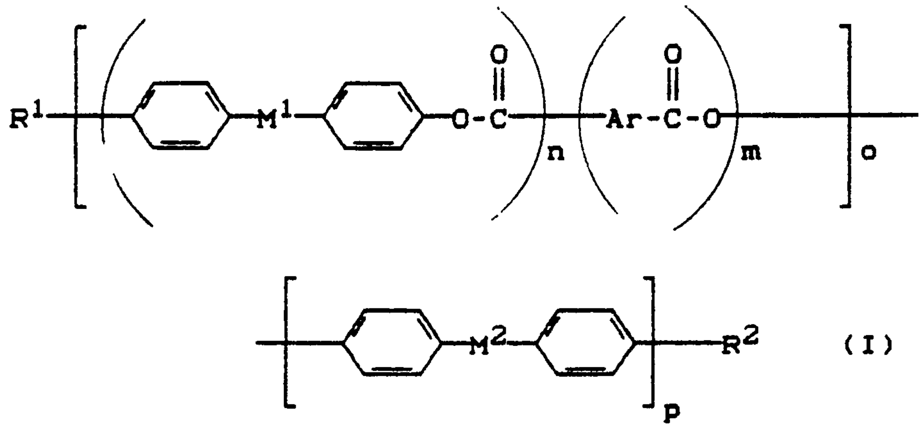

(I)

worin

-Ar ein aromatischer Rest mit 6 - 20 C-Atomen ist, der einkernig oder mehrkernig sein kann, wobei der mehrkernige Rest einbindig verknüpft oder annelliert sein kann,

worin

$R^1$ und $R^2$ gleich oder verschieden sein können und H, Chlor, O-$C_1$-C4-Alkyl, O-$C_3$-$C_6$-Cycloalkyl, O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_{3-6}$-Cycloalkyl, fluoriertes $C_{6-14}$-Aryl, oder ein Rest der Formeln (1a) bis 11) sind,

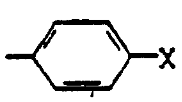 , 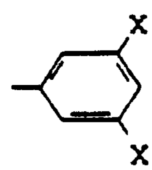 , 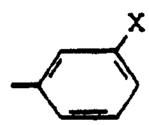 , 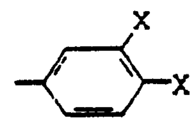 ,

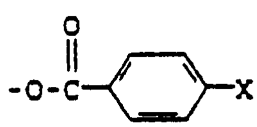 , 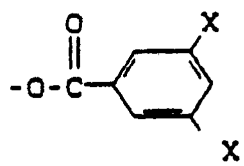 , 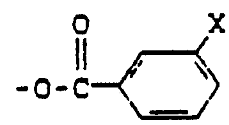 ,

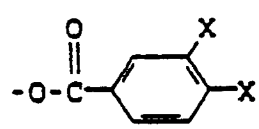 , 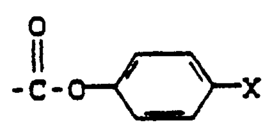 , 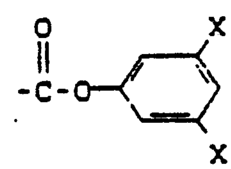 ,

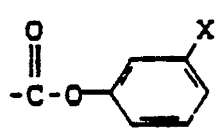 , 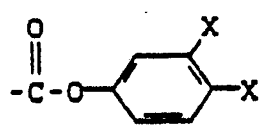

(Reste (1a) - (11) entsprechend ihrer Abfolge) wobei

X wiederum die vorstehend für $R^1$ bzw. $R^2$ genannten Reste von H bis fluoriertes $C_6$-$C_{14}$-Aryl ist,

worin -$M^1$- und -$M^2$- gleich oder verschieden sind und zweibindige Reste der Formeln (I.1) bis (I.11)

$-\underset{\underset{O}{\|}}{C}-O-$, $-\underset{\underset{O}{\|}}{C}-NH-$,

$-N=N-$, $-N=\underset{\underset{O}{\downarrow}}{N}-$,

$-CH=N-$, $-CH=CH-$,

$-C\equiv C-$, $-O-\underset{\underset{O}{\|}}{C}-$,

$-HN-\underset{O}{\underset{\|}{C}}-$, $-\underset{O}{\underset{\downarrow}{N}}=N-$

und $-N=CH-$

(Reste (I.1)-(I.11) entsprechend ihrer Abfolge) sein können,

und worin

"m" Null, 1 oder 2,

"n" 1 oder 2,

"o" 1, 2, 3 oder 4 und

"p" Null oder 1 sind, wobei im Falle von p = Null $R^2$ nur (1a), (1b), (1c) oder (1d) sein kann,

und/oder

flüssigkristalliner Ester- und/oder Esteramid-Oligomerer der Formel (II) mit statistischer Verteilung der Struktureinheiten

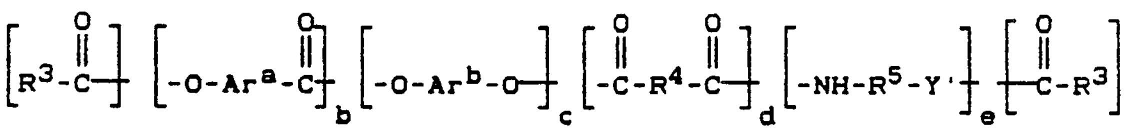

(II)

worin

$R^3$ einen Alkylrest, vorzugsweise einen Methylrest, oder einen gegebenenfalls substituierten, vorzugsweise mono- oder disubstituierten Arylrest, vorzugsweise einen Phenylrest, darstellt,

($R^3-\underset{O}{\underset{\|}{C}}$ ist jeweils eine Endgruppe)

$Ar^a$ ein bivalenter, gegebenenfalls substituierter (Substituenten wie in $R^3$), ein- oder mehrkerniger aromatischer Rest mit 6-24 C-Atomen ist, wobei der mehrkernige Rest direkt verknüpft oder auch annelliert sein kann,

$Ar^b$ einen bivalenten, gegebenenfalls substituierten, ein- oder mehrkernigen aromatischen Rest mit 6-30 C-Atomen darstellt, wobei der mehrkernige Rest unterschiedlich verknüpft sein kann,

$R^4$ bzw. $R^5$ für einen Alkylrest mit 0-40 ($R^4$) bzw. 3-40 ($R^5$) C-Atomen stehen oder beide auch für einen cycloaliphatischen Rest mit 5- 15 C-Atomen stehen können oder bevorzugt die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch annelliert verknüpft sein kann,

$Y'$ für -O-,

$-\overset{O}{\overset{\|}{C}}-$ oder -NH- steht, und im Falle der Verknüpfung mit einer Endgruppe

$-\overset{O}{\overset{\|}{C}}-R^3$ für die Reste -O- oder -NH- steht, und

b = Null bis 10, vorzugsweise bis 8, insbesondere bis 4,

c = 1 bis 9, vorzugsweise bis 7, insbesondere 1 bis 4,

d = Null bis 9, vorzugsweise bis 7, insbesondere bis 3, und

e = Null bis 3, vorzugsweise bis 2 ist,

und worin die Endgruppen durch Strukturelemente des Typs

$R^3-\overset{O}{\overset{\|}{C}}-$ gebildet werden,

und wobei das mittlere Molekulargewicht $\overline{M}n$ der Verbindungen der Formel (II) nicht größer als 4000, bevorzugt nich größer als 2500 ist und wobei die statistisch aufgebauten Verbindungen der Formel (II) bevorzugt als LC-Additive 2) eingesetzt werden,

sowie gegebenenfalls

3) 0,001-150 Gew.-%, bezogen auf die Summe der Gewichte der Komponenten 1) und 2), an üblichen Zusatzstoffen, wobei die Zusatzstoffe wahlweise auch ganz oder teilweise schon in den unter 1) genannten Polyamiden enthalten sein können,

hergestellt werden.

2. Leichtfließende Polyamid-Formmassen und -Legierungen nach Anspruch 1, dadurch gekennzeichnet, daß als Bausteine für die flüssigkristallinen Verbindungen der Formel (II) bevorzugt 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure, Hydrochinon, 4,4′-Dihydroxydiphenyl, 4,4′-Dihydroxydiphenylether, 4,4′, Dihydroxydiphenylethan, 4,4′-Dihydroxydiphenoxyethan, 3,5′-Dihydroxydiphenyl, 3,5′-Dihydroxydiphenylether, 1,5-Dihydroxynaphthalin, 2,6-Dihydroxynaphthalin, 1,4-Dihydroxynaphthalin, Methylhydrochinon, Phenylhydrochinon, 2 ,2′-Dimethyl-4,4′-dihydroxydiphenyl, 3,3′,5,5′-Tetramethyl-4,4′-dihydroxydiphenyl, 1,2-(2-Chlor-4-hydroxyphenoxy)ethan, 4-Methoxy-2,6-dihydroxynaphthalin, Resorcin, 3,4′-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-dihydroxynaphthalin und 4-Methoxy-2,7-dihydroxynaphthalin, 1,4-Naphthalindicarbonsäure, 1,5-Naphthalindicarbonsäure, 2,6-Naphthalindicarbonsäure, Biphenyl-4,4′-dicarbonsäure, Biphenyl-3,3′-dicarbonsäure, Diphenoxyethan-4,4′-dicarbonsäure, Diphenylether-4,4′-dicarbonsäure, Methylterephthalsäure, Methoxyterephthalsäure, Chlorterephthalsäure, 4-Chlornaphthalin-2,7-dicarbonsäure, 2,6- oder 2,7-Naphthalindicarbonsäure, Biphenyl-3,4′-dicarbonsäure, 4-Methylisophthalsäure, 5-Methylisophthalsäure, Diphenylether-4,4′-dichlor-3,3′-dicarbonsäure, Iso- und Terephthalsäure, ε-Aminocapronsäure bzw. Caprolactam, ω-Aminoundecansäure, ω-Aminododecansäure bzw. Laurinlactam, 4-Aminocyclohexyl-carbonsäure, 4-Aminobenzoesäure, 6-Amino-2-naphthoesäure, 3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4′-Amino-1-hydroxybiphenyl, Oxalsäure, Bernsteinsäure, Adipinsäure, Korksäure, Azelainsäure, Trimethyladipinsäure, Sebacinsäure, Dodecandisäure, Dimerfettsäuren, 1,4-Cyclohexandicarbonsäure, Benzoesäure, 4-Methylbenzoesäure, 4-Methoxybenzoesäure und 4-Biphenylcarbonsäure,
und besonders bevorzugt Hydrochinon, 4,4′-Dihydroxybiphenyl, 4-Aminophenol, 3-Aminophenol, 4′- Amino-1-hydroxybiphenyl, 4-Hydroxybenzoesäure, 3-Hydroxybenzoesäure, 6-Hydroxy-2-naphthoesäure, Isophthalsäure, Terephthalsäure, Oxalsäure, Adipinsäure, Sebazinsäure und Dimerfettsäuren, 4-Aminobenzoesäure und 6-Amino-2-naphthoesäure, ε-Aminocapronsäure bzw. Caprolactam, Benzoesäure, 4-Methylbenzoesäure und 4-Biphenylcarbonsäure verwendet werden, und wobei die Additive der Formel (II) durchschnittlich bevorzugt 3-25 und besonders bevorzugt 4-20 aromatische Teilstrukturen enthalten.

3. Leichtfließende Polyamid-Formmassen und -Legierungen nach mindestens einem der Ansprüche 1 bis 3, dadurch gekennzeichnet, daß als Polyamid-Komponenten 1), einzeln oder im Gemisch, bevorzugt Polyamid 6, 66, 46, 610, 11, 12, 1012, 1212, 6I6, 6I, 6T6, 6/66-Copolyamide, Copolyamide aus Caprolactam, Isophthalsäure und Isophorondiamin, Copolyamide aus Isophthalsäure (+ ggf. Terephthalsäure), Azelainsäure und 4,4′-Diaminodicyclohexylmethan (bzw. Isomerengemische) und besonders bevorzugt Polyamid 6 und 66 eingesetzt werden.

4. Polyamid-Legierungen nach mindestens einem der Ansprüche 1 bis 4, dadurch gekennzeichnet, daß als polymere Legierungspartner u.a. Dienkautschuke, Acrylat-Kautschuke, Polyethylen, Polypropylen, Ethylen/Propylen-Copolymere, Ethylen/1-Buten-Copolymere, Ethylen/Propylen-Dien-Terpolymere, Ethylen- und/oder Propylen-Acrylsäure(ester)-Copolymere, Ethylen/Vinylacetat-Copolymere, Polyoctenylene, Polystyrole, (α-Methyl)-Styrol/(Meth)acryl nitrilcopolymere, (Meth)Acrylnitril/Butadien/(α-Methyl)Styrol-Polymere (ABS), schlagzähe Polystyrole, Polycarbonate, aromatische Polyester(carbonate), Polyester wie z.B. Polyethylenterepthalat, Polysulfone, Polyphenylenoxide, Polyetherketone, Polyethersulfone, Polyetheretherketone, Polyetherimide, Polyesterimide, Polyamidimide und Polyimide eingesetzt werden, und gegebenenfalls niedermolekulare und/oder polymere Verträglichkeitsvermittler anwesend sind.

5. Leichtfließende Polyamid-Formmassen und -Legierungen nach Anspruch 1, dadurch gekennzeichnet, daß als Zusatzstoffe gemäß 3) Verstärkungsmaterialien (Glasfasern, Aramidfasern, Kohlenstoffasern, Glaskugeln, $SiO_2$, Kreide, $TiO_2$, Talkum, Kaolin, Glimmer, $TiO_2$ u.a.), Weichmacher, Antioxidantien, Pigmente, Farbstoffe, Bewitterungsstabilisatoren (bzw. Stabilisatorkombinationen), Gleitmittel, Fließhilfsmittel, Entformungsmittel, Nukleierungsmittel, die Wasseraufnahme verringernde Zusätze (bevorzugt Monophenole, Bisphenole und (Alkyl)phenol-Formaldehyd-Kondensate), Flammschutzmittel, polymere Legierungspartner u.a.m. eingesetzt werden können, wobei zur Herstellung von Polyamid-Legierungen immer mindestens ein polymerer Legierungspartner nach Anspruch 4 als Zusatzstoff gemäß 3) eingesetzt werden muß, und wobei die Zusatzstoffe gemäß 3) unabhängig voneinander für sich oder in Form eines Konzentrats zudosiert werden oder auch nach Vorvermischung mit dem Polyamid als in diesem enthalten zudosiert werden können.

6. Verfahren zur Herstellung der Polyamid-Formmassen und-Legierungen nach Anspruch 1, dadurch gekennzeichnet, daß mindestens ein Polyamid gemäß 1), mindestens ein flüssigkristallines Additiv (I) und/oder (II) gemäß 2) sowie gegebenenfalls die weiteren Zusatzstoffe gemäß 3), wobei zur Herstellung von Polyamid-Legierungen immer mindestens ein polymerer Legierungspartner als Zusatzstoff gemäß 3) eingesetzt wird, und wobei die gegebenenfalls miteinzusetzenden Zusatzstoffe 3), auch polymere Legierungspartner, unabhängig voneinander für sich oder als Konzentrat eingesetzt werden können, oder auch schon in den Polyamiden 1) enthalten sein können, in der Schmelze, bevorzugt in Extrudern, vermischt werden, und die Schmelze in bekannter Weise aufgearbeitet wird.

7. Formkörper, Folien, Fasern und andere Gegenstände aus Polyamid-Formmassen und -Legierungen nach mindestens einem der Ansprüche 1 bis 6.

8. Flüssigkristalline Ester- und/oder Esteramid-Oligomere mit Molekulargewichten ( $\overline{M}n$) nicht größer als 4000, bevorzugt nicht größer als 2500, mit statistischer Verteilung der Struktureinheiten entsprechend Formel (II)

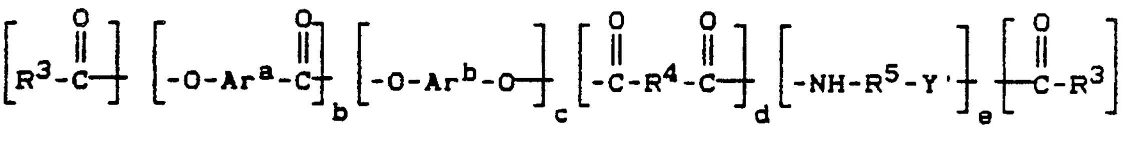

(II)

worin

$R^3$ einen Alkylrest, vorzugsweise Methylrest, oder einen gegebenenfalls substituierten, vorzugsweise mono- oder disubstituierten Arylrest, vorzugsweise einen Phenylrest, darstellt,

($R^3$- C
‖
O

ist jeweils eine Endgruppe)

$Ar^a$ ein bivalenter, gegebenenfalls substituierter (Substituenten wie in $R^3$), ein- oder mehrkerniger aromatischer Rest mit 6-24 C-Atomen ist, wobei der mehrkernige Rest direkt verknüpft oder auch anelliert sein kann,

$Ar^b$ einen bivalenten, gegebenenfalls substituierten, ein- oder mehrkernigen aromatischen Rest mit 6-30 C-Atomen darstellt, wobei der mehrkernige Rest unterschiedlich verknüpft sein kann,

$R^4$ bzw. $R^5$ für einen Alkylrest mit 0-40 ($R^4$) bzw. 3-40 ($R^5$) C-Atomen stehen oder beide auch für einen cycloaliphatischen Rest mit 5-15 C-Atomen stehen können oder die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch anelliert verknüpft sein kann,

Y′ für -O-,

O
‖
- C - oder -NH- steht, und im Falle der Verknüpfung mit einer Endgruppe

O
‖
-C -$R^3$ für die Reste -O- oder -NH- steht, und

b = Null bis 10, vorzugsweise bis 8, insbesondere bis 4,

c = 1 bis 9, vorzugsweise bis 7, insbesondere 1 bis 4,

d = Null bis 9, vorzugsweise bis 7, insbesondere bis 3, und

e = Null bis 3, vorzugsweise bis 2, ist und

und worin die Endgruppen durch Strukturelemente des Typs

O
‖
$R^3$- C - gebildet werden,

und wobei die Verbindungen der Formel (II) durchschnittlich bevorzugt 3-25, besonders bevorzugt 4-20 aromatische Teilstrukturen enthalten.

9. Ester- und/oder Esteramid-Oligomere der Formel (II) nach Anspruch 8, dadurch gekennzeichnet, daß als Bausteine für (II) bevorzugt 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure, Hydrochinon, 4,4′-Dihydroxydiphenyl, 4,4′-Dihydroxydiphenylether, 4,4′-Dihydroxydiphenylethan, 4,4′-Dihydroxydiphenoxyethan, 3,5′-Dihydroxydiphenyl, 3,5′-Dihydroxydiphenylether, 1,5-Dihydroxynaphthalin, 2,6-Dihydroxy naphthalin, 1,4-Dihydroxynaphthalin, Methylhydrochinon, Phenylhydrochinon, 2,2′-Dimethyl-4,4′-dihydroxydiphenyl, 3,3′,5,5′-Tetramethyl-4,4′-dihydroxydiphenyl, 1,2-(2-Chlor-4-hydroxyphenoxy)ethan, 4-Methoxy-2,6-dihydroxynaphthalin, Resorcin, 3,4′-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-dihydroxynaphthalin und 4-Methoxy-2,7-dihydroxynaphthalin, 1,4-Naphthalindicarbonsäure, 1,5-Naphthalindicarbonsäure, 2,6-Naphthalindicarbonsäure, Biphenyl-4,4′-dicarbonsäure, Biphenyl-3,3′-dicarbonsäure, Diphenoxyethan-4,4′-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 2,6-oder 2,7-Naphthalindicarbonsäure, Biphenyl-3,4'-dicarbonsäure, 4-Methylisophthalsäure, 5-Methylisophthalsäure, Diphenylether-4,4'-dichlor-3,3'-dicarbonsäure, Iso- und Terephthalsäure, ε-Aminocapronsäure bzw. Caprolactam, ω-Aminoundecansäure, ω-Aminododecansäure bzw. Laurinlactam, 4-Aminocyclohexyl-carbonsäure, 4-Aminobenzoesäure, 6-Amino-2-naphthoesäure, 3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4'-Amino-1-hydroxybiphenyl, Oxalsäure, Bernsteinsäure, Adipinsäure, Korksäure, Azelainsäure, Trimethyladipinsäure, Sebacınsäure, Dodecandisäure, Dimerfett säuren, 1,4-Cyclohexandicarbonsäure, Benzoesäure, 4-Methylbenzoesäure, 4-Methoxybenzoesäure und 4-Biphenylcarbonsäure,
und besonders bevorzugt Hydrochinon, 4,4'-Dihydroxybiphenyl, 4-Aminophenol, 3-Aminophenol, 4'-Amino-1-hydroxybiphenyl, 4-Hydroxybenzoesäure, 3-Hydroxybenzoesäure, 6-Hydroxy-2-naphthoesäure, Isophthalsäure, Terephthalsäure, Oxalsäure, Adipinsäure, Sebazinsäure, Dimerfettsäuren, 4-Aminobenzoesäure und 6-Amino-2-naphthoesäure, ε-Aminocapronsäure bzw. Caprolactam, Benzoesäure, 4-Methylbenzoesäure und 4-Biphenylcarbonsäure verwendet werden,
wobei bevorzugte Verbindungen der Formel (II) 3-25 und besonders bevorzugte 4-20 aromatische Teilstrukturen enthalten.

10. Verwendung von niedermolekularen, flüssigkristallinen Estern und/oder Esteramiden der allgemeinen Formel (I) und/oder oligomeren, flüssigkristallinen Estern und/oder Esteramiden der Formel (II.2) nach Ansprüchen 8 und 9 als flüssigkristalline Fließverbesserer für Polyamide in Mengen von 0,1 bis 15 Gew.-%, bezogen auf die Summe der Gewichte von 1) und 2), zur Herstellung von leichtfließenden Polyamid-Formmassen und/oder -Legierungen unter Schmelzvermischung mit Polyamiden 1) und gegebenenfalls Zusatzstoffen 3).